# EUROPEAN PATENT APPLICATION

(11) **EP 2 045 012 A1**
(43) Date of publication of application: **08.04.2009**
(21) Application number: 07767478.6
(22) Date of filing: 25.06.2007
(51) Int. Cl.: B01J 29/16, B01J 35/10, C10G 11/05, C10G 11/18

(54) **FLUID CATALYTIC CRACKING CATALYST HAVING DESULFURIZING FUNCTIONS, PROCESS FOR PRODUCTION OF THE SAME, AND PROCESS FOR PRODUCTION OF LOW-SULFUR CATALYTICALLY CRACKED GASOLINE WITH THE CATALYST**

(30) Priority: 28.06.2006 JP 2006178348; 07.09.2006 JP 2006243311; 07.09.2006 JP 2006243313
(71) Applicant: Idemitsu Kosan Co., Ltd., Chiyoda-ku Tokyo 100-8321 (JP); PETROLEUM ENERGY CENTER (PEC), A juridical incorporated foundation, Tokyo 105-0001 (JP)
(72) Inventor: IINO, Akira, Ichihara-shi, Chiba 299-0107 (JP); ITOH, Toshio, Ichihara-shi, Chiba 299-0107 (JP); AKASHI, Shinji, Ichihara-shi, Chiba 299-0107 (JP)
(74) Representative: HOFFMANN EITLE
(86) International application number: PCT/JP2007/062671
(87) International publication number: WO 2008/001709

(57) **Abstract**

The present invention 1, 2 or 3 provides a desulfurization function-added FCC catalyst which can efficiently reduce the sulfur content of FCC gasoline while maintaining the yield of FCC gasoline in a process of producing FCC gasoline by cracking of heavy oil. The catalyst has vanadium supported on a carrier comprising (a) an alumina-coated zeolite and (b) a porous inorganic oxide except zeolite and/or a clay mineral, wherein the supported vanadium amount is from 500 to 20000 ppm by mass in terms of vanadium metal and the acid amount is from 20 to 450 µmol/g and the macropore surface area is from 30 to 150 m²/g; or the catalyst has vanadium supported on a carrier containing from 5 to 40 % by mass of (a) an alumina-coated zeolite and from 30 to 70 % by mass of (b) an alumina, wherein the vanadium concentration ratio before and after grinding the catalyst is at least 2; or the catalyst has at least vanadium and manganese and/or phosphorus supported on a porous inorganic oxide-containing carrier, wherein the supported vanadium amount is from 500 to 20000 ppm by mass in terms of vanadium metal, vanadium and manganese and/or phosphorus form a complex ion in the supporting solution for use in supporting vanadium and manganese and/or phosphorus, and the permeability of the complex ion through a reverse osmosis membrane is at most 25 % relative to the permeability of vanadium through the reverse osmosis membrane.

## Description

### [Technical Field]

The present inventions 1 to 3 relate to a desulfurization function-added fluid catalytic cracking catalyst and its production method, and to a method for producing low-sulfur fluid catalytic cracking gasoline using the desulfurization function-added fluid catalytic cracking catalyst; and precisely to a catalyst for producing low-sulfur fluid catalytic cracking gasoline in fluid catalytic cracking unit (hereinafter sometimes referred to as "FCC unit" ) and its production method, and to a method for producing low-sulfur fluid catalytic cracking gasoline.

### [Background Art]

The recent surge in environmental issues has brought about global regulation on the sulfur content of gasoline.
In Japan, the sulfur content of gasoline was limited to at most 50 ppm by mass in 2005, and its limitation may be expected to be at most 10 ppm by mass in future.
In order to regulate the sulfur content of gasoline to at most 10 ppm by mass, the sulfur content of fluid catalytic cracking gasoline (hereinafter sometimes referred to as "FCC gasoline") for use as gasoline must be reduced more than before, and it is an urgent issue for petroleum refining companies to remove sulfur from the FCC gasoline to produce ecological gasoline.
FCC gasoline is produced in FCC unit, and the FCC unit includes resid fluid catalytic cracking (RFCC) unit for producing a gasoline fraction and a gas oil fraction from desulfurized atmospheric resid (DSRC) supplied from resid hydrodesulfurization unit (RH) or from other heavy fraction-rich feed oil, and FCC (FCC) for producing a gasoline fraction and a gas oil fraction from feed oil of desulfurized heavy gas oil (VHHGO) or desulfurized vacuum gas oil (VHVGO) obtained through heavy gas oil, or vacuum gas oil hydrodesulfurization unit (VH).
As other feed oil, there is known deasphalted oil obtained from solvent deasphaltation unit.

In case where feed oil mainly supplied from resid hydrodesulfurization unit is processed in RFCC unit, the sulfur content of the FCC gasoline is high and is approximately from 40 to 100 ppm by mass.
On the other hand, in case where feed oil mainly supplied from heavy gas oil hydrodesulfurization unit is processed in FCC unit, the sulfur content of the FCC gasoline is, though depending on the property of the feed oil, lower than that from RFCC unit, and is approximately from 20 to 50 ppm by mass.
Accordingly, ordinary FCC gasoline has a high sulfur content, and it is difficult to produce gasoline having a sulfur content of not more than 10 ppm by mass by using FCC gasoline directly as it is.

For reducing the sulfur content of FCC gasoline, there is known a method for reducing as much as possible the sulfur content of feed oil in resid hydrodesulfurization unit or heavy gas oil hydrodesulfurization unit in the former stage of FCC unit, or a method for reducing the sulfur content by providing hydrodesulfurization unit for FCC gasoline as post-treatment unit.
However, in the method for providing the post-treatment unit, hydrodesulfurization unit for FCC gasoline is newly installed in many cases, and it is problematic as requiring a vast construction cost.
Another problem is that it requires other running costs such as utility costs for use of hydrogen or the like for operating the former stage and/or latter stage desulfurization units.
Further, there is still another problem in that the CO₂ emission increases owing to the increase in the operating load for those units.

In that situation, there has been made a trial of developing the FCC fluid catalytic cracking catalyst (hereinafter sometimes referred to as "FCC catalyst") for use in the FCC unit have a desulfurization function to thereby reduce the sulfur content of FCC gasoline.
Some proposals have heretofore been made for a technique of using such a FCC catalyst having a desulfurization function (hereinafter sometimes referred to as "desulfurization function-added FCC catalyst") to produce low-sulfur FCC gasoline.
For example, an example of processing undesulfurized vacuum gas oil with the desulfurization function-added FCC catalyst has been reported (see Non-Patent Reference 1).
However, since feed oil used is undesulfurized oil and the desulfurization function of the catalyst is insufficient, the sulfur content of the obtained FCC gasoline is from 200 to 400 ppm by mass and is high.
This is because, in heavy oil or heavy gas oil not processed for hydrodesulfurization, the sulfur compounds has a structure that could be hardly removed by catalytic cracking, and it is difficult to produce FCC gasoline having a sulfur content of less than 200 ppm by mass from those feed oils.
In addition, for example, when the already-existing desulfurization function-added FCC catalyst as disclosed in Non-Patent Reference 1 is used in processing feed oil of desulfurized heavy oil or heavy gas oil that has been treated under an ordinary condition, it is still difficult to produce FCC gasoline having a sulfur content of not more than 50 ppm by mass, since the desulfurization activity of the catalyst is insufficient.

A method has been proposed, which comprises catalytically cracking a sulfur-containing hydrocarbon by the use of a catalyst having from 1 to 50 % by mass of a Lewis acid selected from compounds of nickel, copper, zinc, aluminium, tin or the like supported on zeolite and alumina dispersed in an oxide matrix, to thereby produce low-sulfur FCC gasoline (see Patent Reference 1).
However, also in this method, the sulfur content of the obtained FCC gasoline is from 200 to 300 ppm by mass and is still high, and the desulfurization capability of the catalyst is insufficient.

Further, a method of making vanadium, zinc, nickel, iron or cobalt supported on a FCC catalyst and using it for fluid catalytic cracking of heavy oil to thereby reduce the sulfur content of the formed FCC gasoline (see Patent Reference 2) ; a method for using a catalyst that contains zeolite prepared by introducing vanadium metal as a cation species into the pores of a molecular sieve (see Patent Reference 3); and a method of using a catalyst that contains zeolite prepared by introducing a vanadium metal and a rare earth element such as lanthanum, cerium or the like into the pores of a molecular sieve (see Patent Reference 4) have been proposed.
Vanadium has a desulfurization activity. But on the other hand, it is a problem that it penetrates into the pores of zeolite to poison the active sites of zeolite, or attacks the zeolite skeleton thereby bringing about breakdown of its structure.
Further, owing to blocking up of pores, there may occur another problem in that the diffusion of feed oil or the cracked product oil may be inhibited.
Accordingly, the catalysts as proposed above have a desulfurization activity to some degree, but they are incapable of meeting further sulfur reduction requirement of recent years, and there is a need for additional improvements.

As a method for supporting metal vanadium on the above-mentioned desulfurization function-added FCC catalyst, there is known a method for applying a solution of ammonium metavanadate, vanadyl oxalate, vanadium naphthenate or vanadium oxysulfate to zeolite or a zeolite-containing catalytic cracking catalyst and supporting vanadium on it according to an ion exchange method.
However, in the supporting method, vanadium exists as a single ion (anion or cation) in the solution, and is therefore supported inside the cation-exchange site in the micropores of zeolite (hereinafter simply referred to as "inside the micropores").
In that manner, when vanadium penetrates into the micropores of zeolite, the breakdown of the zeolite crystal is promoted by the vanadium's attack to the zeolite skeleton, therefore bringing about the reduction of the FCC gasoline yield and the catalyst desulfurization capability.

Further, a method for producing low-sulfur FCC gasoline has been proposed, which comprises using a mixed catalyst of a desulfurization function-added FCC catalyst that contains any of vanadium, zinc and a rare earth element having an oxidation stage of more than 0, inside the pore structure in zeolite (micropores) and an ordinary FCC equilibrium catalyst (see Patent Reference 5).
In this method, vanadyl sulfate or vanadium oxalate is used as the supporting solution to support the metal on a carrier; however, since the vanadium amount to be supported on the outer surface of the carrier, the mesopores of the carrier or the macropores of the carrier is small, the sulfur content of the obtained FCC gasoline is about 600 ppm by mass and is high.
Even when feed oil having an extremely low sulfur content of 0.071% by mass is used, the sulfur content of the FCC gasoline is 79 ppm by mass and is still high, and the desulfurization activity of the mixed catalyst could not be sufficient.

[Non-Patent Reference 1] Oil & Gas Journal. Feb. 12 (2001)
[Patent Reference 1] JP-A 6-277519
[Patent Reference 2] JP-A 2003-27065
[Patent Reference 3] Japanese Patent 3545652
[Patent Reference 4] Japanese Patent 3550065
[Patent Reference 5] JP-A 2000-198989

### [Disclosure of the Invention]

The present invention 1, 2 or 3 has been made under the situation as above, and its object is to provide a fluid catalytic cracking catalyst which can efficiently desulfurize heavy oil in FCC unit, not requiring to construct a new desulfurization unit in the latter stage of the above-mentioned FCC unit, which can reduce the severe operating condition of the former stage and/or latter stage of the desulfurization unit, and which can reduce CO₂ emission and can reduce the unit-operation cost.
Specifically, an object of the present invention is to provide FCC catalyst capable of efficiently reducing the sulfur content of FCC gasoline, while maintaining the yield of FCC gasoline and LCO (light cycle oil) in a process of producing FCC gasoline through cracking of heavy oil.
The present invention also provides a method for producing the FCC catalyst that comprises a desulfurization function-having metal such as vanadium or the like most suitably supported on a carrier, and a method for producing low-sulfur FCC gasoline by the use of this catalyst.

For cracking heavy oil and for maintaining the yield of FCC gasoline, it is important to effectively utilize the cracking active point of the catalyst, zeolite (the acid point of zeolite), and for this, it is important to maintain the crystallinity of zeolite.
On the other hand, for promoting the desulfurization of FCC gasoline, it is effective to make desulfurization activity-having vanadium supported on zeolite.
However, vanadium is a substance of destroying the skeleton structure of zeolite, and therefore a technique of supporting vanadium while maintaining the crystallinity of zeolite is necessary.
The present inventors have assiduously studied and, as a result, have found that, when desulfurization function-having vanadium is supported not inside the micropores of zeolite but on the outer surface thereof, or on the matrix of catalyst, such as silica, alumina or the like, or on a binder function-having clay mineral such as kaolin or the like, vanadium can be supported while the crystallinity of zeolite is maintained as such.

In addition, the present inventors have found that a desulfurization function-having FCC catalyst which comprises vanadium supported on a carrier containing alumina-coated zeolite and alumina and in which the vanadium concentration ratio (before grinding/after grinding), as measured according to X-ray photo-electronic spectrometry before and after grinding the catalyst, is at least 2 can solve the above-mentioned problems.

Further, the present inventors have found that a catalyst which has vanadium and manganese and/or phosphorus supported on a porous inorganic oxide-containing carrier and in which vanadium and manganese and/or phosphorus are complex-ionized in the supporting solution that supports the metal of the active species can solve the above-mentioned problems.
The present inventions 1 to 3 have been completed on the basis of these findings.

Specifically, the present inventions 1 to 3 provide the following:
(1) A desulfurization function-added FCC catalyst having vanadium supported on a carrier comprising (a) an alumina-coated zeolite and (b) a porous inorganic oxide except zeolite and/or a clay mineral, wherein the supported vanadium amount is from 500 to 20000 ppm by mass in terms of vanadium metal and the acid amount is from 20 to 450 µmol/g and the macropore surface area is from 30 to 150 m²/g;
(2) The desulfurization function-added FCC catalyst of above (1), wherein the zeolite is at least one selected from Y-type zeolite, rare earth exchanged Y-type zeolite, USY-type zeolite, rare earth exchanged USY-type zeolite, β-type zeolite, ZSM-5 and L-type zeolite;
(3) The desulfurization function-added FCC catalyst of above (2), wherein the zeolite is at least one selected from Y-type zeolite, rare earth exchanged Y-type zeolite, USY-type zeolite and rare earth exchanged USY-type zeolite;
(4) The desulfurization function-added FCC catalyst of above (1), wherein the vanadium to be supported is vanadium alone or vanadium and any other different metal, at least a part of which forms a polynuclear complex salt;
(5) The desulfurization function-added FCC catalyst of above (4), wherein the polynuclear complex salt is a di- to tetra-nuclear complex salt of vanadium alone or vanadium and any other different metal;
(6) The desulfurization function-added FCC catalyst of above (4), wherein the polynuclear complex salt is isopolyacid salt or heteropolyacid salt;
(7) The desulfurization function-added FCC catalyst of above (1), wherein vanadium is supported by the use of a supporting solution prepared by mixing a vanadium-containing solution and at least one selected from inorganic acids, organic acids and other metal salts;
(8) The desulfurization function-added FCC catalyst of above (7), wherein the inorganic acid is at least one selected from sulfuric acid, hydrochloric acid, phosphoric acid, nitric acid, perchloric acid, boric acid and pyrophosphoric acid; the organic acid is at least one selected from oxalic acid, acetic acid, citric acid, glutamic acid, gluconic acid, stearic acid, formic acid, tartaric acid, benzoic acid, succinic acid, salicylic acid, aspartic acid, ascorbic acid, acetylsalicylic acid and amino acid; the other metal salt is at least one inorganic metal salt or organic metal salt ; and the metal is selected from manganese, magnesium, calcium, cobalt, zinc, copper, titanium, aluminium, nickel, iron, chromium, lanthanum, yttrium, scandium, niobium, tantalum, molybdenum and tungsten;
(9) The desulfurization function-added FCC catalyst of the above (7), wherein vanadium forms a polynuclear complex salt in the supporting solution;
(10) The desulfurization function-added FCC catalyst of the above (8), wherein the polynuclear complex salt is isopolyacid salt or heteropolyacid salt;
(11) The desulfurization function-added FCC catalyst of above (1), wherein vanadium is supported on at least any of the outer surface of zeolite, or the porous inorganic oxide except zeolite and the clay mineral;
(12) The desulfurization function-added FCC catalyst of above (1), wherein the porous inorganic oxide is at least one selected from alumina, silica, silica-alumina, titania, alumina-titania, and silica-titania, and the clay mineral is at least one selected from kaolin, halloysite and bentonite;
(13) The desulfurization function-added FCC catalyst of above (1), which further contains a FCC equilibrium catalyst having a vanadium and nickel accumulated amount of from 50 to 20000 ppm by mass, as mixed in an amount of from 0 to 98 % by mass based on the total amount of the catalyst;
(14) A method for producing a desulfurization function-added FCC catalyst having vanadium supported on a carrier comprising (a) an alumina-coated zeolite and (b) a porous inorganic oxide except zeolite and/or a clay mineral, which comprises mixing a vanadium salt and an inorganic acid or an organic acid to prepare a water-soluble polyacid salt, and then supporting it on the carrier;
(15) A method for producing a desulfurization function-added FCC catalyst having vanadium supported on a carrier comprising (a) an alumina-coated zeolite and (b) a porous inorganic oxide except zeolite and/or a clay mineral, which comprises preparing an aqueous solution of a mixture of a vanadium salt and a salt of any other metal, and supporting the aqueous solution on the carrier;
(16) The method for producing a desulfurization function-added FCC catalyst of the above (15), wherein the other metal which constitutes inorganic metal salt or organic metal salt is at least one selected from manganese, magnesium, calcium, cobalt, zinc, copper, titanium, aluminium, nickel, iron, chromium, lanthanum, yttrium, scandium, niobium, tantalum, molybdenum, and tungsten;
(17) A method for producing low-sulfur FCC gasoline, comprising catalytically cracking heavy oil by the use of the desulfurization function-added FCC catalyst of the above (1) ;
(18) A method for producing low-sulfur FCC gasoline, comprising catalytically cracking heavy oil by the use of the desulfurization function-added FCC catalyst produced according to the method of the above (14);
(19) The method for producing low-sulfur FCC gasoline of the above (17), wherein the heavy oil is desulfurized heavy oil and/or desulfurized heavy gas oil, the sulfur content of the heavy oil is from 0.03 to 0.7 % by mass, and the sulfur content of the obtained low-sulfur FCC gasoline within a range of the boiling point range C₅ to 230°C is at most 50 ppm by mass;
(20) The method for producing low-sulfur FCC gasoline of the above (19), wherein the sulfur content of the obtained low-sulfur FCC gasoline within a range of the boiling point range C₅ to 230°C is at most 30 ppm by mass;
(21) The method for producing low-sulfur FCC gasoline of the above (20), wherein the sulfur content of the obtained low-sulfur FCC gasoline within a range of the boiling point range C₅ to 230°C is at most 15 ppm by mass;
(22) A desulfurization function-added FCC catalyst having vanadium supported on a carrier containing from 5 to 40 % by mass of (a) an alumina-coated zeolite and from 30 to 70 % by mass of (b) an alumina, wherein the vanadium concentration ratio (before ground/after ground), as measured according to X-ray photo-electronic spectrometry before and after grinding the catalyst, is at least 2;
(23) The desulfurization function-added FCC catalyst of the above (22), wherein the alumina amount of (a) an alumina-coated zeolite is from 3 to 15 % by mass;
(24) The desulfurization function-added FCC catalyst of the above (22), wherein the supported vanadium amount is from 500 to 20000 ppm by mass in terms of vanadium metal;
(25) The desulfurization function-added FCC catalyst of the above (22), wherein the zeolite is at least one selected from Y-type zeolite, rare earth exchanged Y-type zeolite, USY-type zeolite, rare earth exchanged USY-type zeolite, β-type zeolite, ZSM-5, and L-type zeolite;
(26) The desulfurization function-added FCC catalyst of the above (22), which further carries manganese and/or phosphorus as supported, and in which the supported manganese amount is from 500 to 20000 ppm by mass in terms of manganese metal and the supported phosphorus amount is from 100 to 7000 ppm by mass in terms of phosphorus atom;
(27) The desulfurization function-added FCC catalyst of the above (26), wherein vanadium, manganese and phosphorus are supported inside the macropores of the carrier;
(28) The desulfurization function-added FCC catalyst of the above (26), wherein a supporting solution contains an aqueous solution of vanadium sulfate and manganese sulfate and/or phosphoric acid in making vanadium and manganese and/or phosphorus supported on a carrier, and the supporting solution has a pH of from 2 to 4;
(29) The desulfurization function-added FCC catalyst of the above (22), wherein the zeolite is ion-exchanged with a rare earth element, and in the process of preparing the catalyst, it is not baked at a temperature higher than 300°C but is only dried;
(30) A FCC catalyst produced by adding (B) a FCC equilibrium catalyst having a vanadium and nickel accumulated amount of from 50 to 20000 ppm by mass to (A) the desulfurization function-added FCC catalyst of the above (22), in an amount of from 0 to 98 % by mass based on the total amount of the catalyst;
(31) A method for producing a desulfurization function-added FCC catalyst by supporting a supporting solution containing an aqueous solution of vanadium sulfate, manganese phosphate and/or phosphoric acid on a carrier containing from 5 to 40 % by mass of (a) an alumina-coated zeolite and from 30 to 70 % by mass of (b) an alumina, wherein the supported vanadium amount is from 500 to 20000 ppm by mass in terms of vanadium metal and the supporting solution is controlled to have a pH of from 2 to 4;
(32) The method for producing a desulfurization function-added FCC catalyst of the above (31), wherein the supported manganese amount is from 500 to 20000 ppm by mass in terms of manganese metal and the supported phosphorus amount is from 100 to 7000 ppm by mass in terms of phosphorus atom;
(33) The method for producing a desulfurization function-added FCC catalyst of the above (31), wherein the zeolite is at least one selected from Y-type zeolite, rare earth exchanged Y-type zeolite, USY-type zeolite, rare earth exchanged USY-type zeolite, β-type zeolite, ZSM-5, and L-type zeolite;
(34) A method for producing low-sulfur FCC gasoline, comprising catalytically cracking heavy oil by the use of the desulfurization function-added FCC catalyst of the above (22) ;
(35) A method for producing low-sulfur FCC gasoline, comprising catalytically cracking heavy oil by the use of the FCC catalyst of the above (30);
(36) A method for producing low-sulfur FCC gasoline, comprising catalytically cracking heavy oil by the use of the desulfurization function-added FCC catalyst produced according to the method of the above (31);
(37) The method for producing low-sulfur FCC gasoline of the above (34), wherein the heavy oil is desulfurized heavy oil and/or desulfurized heavy gas oil, the sulfur content of the heavy oil is from 0.03 to 0.7 % by mass, and the sulfur content of the obtained low-sulfur FCC gasoline within a range of the boiling point range C₅ to 230°C is at most 50 ppm by mass;
(38) The method for producing low-sulfur FCC gasoline of the above (37), wherein the sulfur content of the obtained low-sulfur FCC gasoline within a range of the boiling point range C₅ to 230°C is at most 30 ppm by mass;
(39) The method for producing low-sulfur FCC gasoline of the above (38), wherein the sulfur content of the obtained low-sulfur FCC gasoline within a range of the boiling point range C₅ to 230°C is at most 15 ppm by mass;
(40) A desulfurization function-added FCC catalyst having at least vanadium and manganese and/or phosphorus supported on a porous inorganic oxide-containing carrier, wherein the supported vanadium amount is from 500 to 20000 ppm by mass in terms of vanadium metal, vanadium and manganese and/or phosphorus form a complex ion in a supporting solution for use in supporting vanadium and manganese and/or phosphorus, and the permeability of the complex ion through a reverse osmosis membrane is at most 25 % relative to the permeability of vanadium through the reverse osmosis membrane;
(41) The desulfurization function-added FCC catalyst of the above (40), wherein the supported manganese amount is from 500 to 20000 ppm by mass in terms of manganese metal;
(42) The desulfurization function-added FCC catalyst of the above (40), wherein the supported phosphorus amount is from 100 to 7000 ppm by mass in terms of phosphorus atom;
(43) The desulfurization function-added FCC catalyst of the above (40), wherein the porous inorganic oxide is at least one selected from zeolite, alumina, silica, silica-alumina, titania, alumina-titania, silica-titania, kaolin, halloysite and bentonite;
(44) The desulfurization function-added FCC catalyst of the above (43), wherein the carrier comprises (a) a zeolite and (b) a porous inorganic oxide except zeolite;
(45) The desulfurization function-added FCC catalyst of the above (44), wherein the zeolite is at least one selected from Y-type zeolite, rare earth exchanged Y-type zeolite, USY-type zeolite, rare earth exchanged USY-type zeolite, β-type zeolite, ZSM-5, and L-type zeolite;
(46) The desulfurization function-added FCC catalyst of the above (44), wherein vanadium is supported on the outer surface of the zeolite or on the porous inorganic oxide except zeolite;
(47) The desulfurization function-added FCC catalyst of the above (40), wherein vanadium is supported inside the macropores of the carrier;
(48) A FCC catalyst produced by adding (B) a FCC equilibrium catalyst having a vanadium and nickel accumulated amount of from 50 to 20000 ppm by mass to (A) the desulfurization function-added FCC catalyst of the above (40), in an amount of from 0 to 98 % by mass based on the total amount of the catalyst;
(49) A method for producing a desulfurization function-added FCC catalyst by supporting a supporting solution that contains at least vanadium and manganese and/or phosphorus on a porous inorganic oxide-containing carrier, wherein the supported vanadium amount is from 500 to 20000 ppm by mass in terms of vanadium metal, vanadium and manganese and/or phosphorus form a complex ion in the supporting solution, and the permeability of the complex ion through a reverse osmosis membrane is at most 25 % relative to the permeability of vanadium through the reverse osmosis membrane;
(50) The method for producing a desulfurization function-added FCC catalyst of the above (49), wherein the supported manganese amount is from 500 to 20000 ppm by mass in terms of manganese metal, and the supported phosphorus amount is from 100 to 7000 ppm by mass in terms of phosphorus atom;
(51) The method for producing a desulfurization function-added FCC catalyst of the above (49), wherein the porous inorganic oxide is at least one selected from zeolite, alumina, silica, silica-alumina, titania, alumina-titania, silica-titania, kaolin, halloysite and bentonite;
(52) The method for producing a desulfurization function-added FCC catalyst of the above (51), wherein the carrier comprises (a) a zeolite and (b) a porous inorganic oxide except zeolite;
(53) The method for producing a desulfurization function-added FCC catalyst of the above (52), wherein the zeolite is at least one selected from Y-type zeolite, rare earth exchanged Y-type zeolite, USY-type zeolite, rare earth exchanged USY-type zeolite, β-type zeolite, ZSM-5 and L-type zeolite;
(54) A method for producing low-sulfur FCC gasoline, comprising catalytically cracking heavy oil by the use of the desulfurization function-added FCC catalyst of the above (40);
(55) A method for producing low-sulfur FCC gasoline, comprising catalytically cracking heavy oil by the use of the FCC catalyst of the above (48);
(56) A method for producing low-sulfur FCC gasoline, comprising catalytically cracking heavy oil by the use of the desulfurization function-added FCC catalyst produced according to the method of the above (49);
(57) The method for producing low-sulfur FCC gasoline of the above (54), wherein the heavy oil is desulfurized heavy oil and/or desulfurized heavy gas oil, the sulfur content of the heavy oil is fro 0.03 to 0.7 % by mass, and the sulfur content of the obtained low-sulfur FCC gasoline within a range of the boiling point range C₅ to 230°C is at most 50 ppm by mass;
(58) The method for producing low-sulfur FCC gasoline of the above (57), wherein the sulfur content of the obtained low-sulfur FCC gasoline within a range of the boiling point range C₅ to 230°C is at most 30 ppm by mass;
(59) The method for producing low-sulfur FCC gasoline of the above (58), wherein the sulfur content of the obtained low-sulfur FCC gasoline within a range of the boiling point range C₅ to 230°C is at most 15 ppm by mass.

According to the present invention 1, in making a desulfurization activity-having vanadium supported on a carrier, the vanadium is prevented from being introduced into the micropores of the crystal structure of the cracking active ingredient zeolite, especially USY zeolite, whereby a FCC catalyst in which the zeolite crystal structure is protected from breakdown can be obtained.
The FCC catalyst can exhibit the desulfurization function of vanadium to the maximum, in which, in addition, the zeolite effectively functions as an acid catalyst, therefore effectively producing low-sulfur FCC gasoline.

According to the present invention 2 or 3, the desulfurization function of vanadium can be exhibited to the maximum and, in addition, zeolite, alumina, silica-alumina or the like can effectively function as an acid catalyst, therefore efficiently producing low-sulfur FCC gasoline.

Further, according to the present invention 1, 2 or 3, in a process of producing FCC gasoline from a residual oil fraction or heavy gas oil fraction in FCC unit, the catalyst of the present invention 1, 2 or 3 is used for simultaneous cracking and desulfurization, thereby bringing about high-yield industrial advantageous production of low-sulfur FCC gasoline having a sulfur content of at moat 50 ppm by mass, or at most 30 ppm by mass or even at most 15 ppm by mass.

### [Best Mode for Carrying out the Invention]

The desulfurization function-added FCC catalyst of the present invention 1 is a catalyst having vanadium supported on a carrier comprising (a) an alumina-coated zeolite and (b) a porous inorganic oxide except zeolite and/or a clay mineral.
Herein, the ingredient (a) is a zeolite coated with alumina.
The zeolite includes Y-type zeolite, rare earth exchanged Y-type zeolite (hereinafter referred to as "REY"), USY-type zeolite (hereinafter simply referred to as "USY"), rare earth exchanged USY-type zeolite (hereinafter referred to as "REUSY"), β-type zeolite, ZSM-5, L-type zeolite, etc. From the viewpoint of the cracking activity and the catalyst stability, especially preferred are Y-type zeolite, rare earth exchanged Y-type zeolite, USY-type zeolite and rare earth exchanged USY-type zeolite.
One or more types of zeolite may be used either singly or as combined.

The content of the non-framework alumina (NFA) in the zeolite is preferably at least 2.0 % by mass.
When the non-framework alumina content is at least 2.0% by mass, then the amount of alumina to coat zeolite in alumina-coating may be enough, therefore sufficiently exhibiting the effect of the present invention 1.
The preferred content of the non-framework alumina (NFA) is from 2.0 to 17.0 % by mass, more preferably from 3. 3 to 8.8 % by mass.
The non-framework alumina is meant to indicate alumina except the alumina to constitute the zeolite skeleton (framework alumina: FA) of all alumina in zeolite; and the amount of non-framework alumina (NFA) is computed according to a formula, 100 x {(amount of all alumina in zeolite) - (FA content)} /mass of zeolite (% by mass).
The non-framework alumina may be formed, for example, by steaming after ion-exchange of zeolite into an ammonium-type one, whereby a part of alumina constituting the zeolite skeleton is released from the skeleton not breaking the crystal structure of zeolite.

In the present invention 1, the crystallinity of zeolite of the ingredient (a) is preferably at least 80 %. The crystallinity of zeolite of at least 80 % may bring about sufficient cracking activity.
From the above-mentioned point, the crystallinity is more preferably at least 90 %.

The method of coating zeolite with alumina is not specifically defined. For example, zeolite is suspended in an aqueous acid solution, and the suspension is added to an aluminium-containing aqueous alkali solution separately prepared, whereby zeolite can be coated with alumina.
The acid to be used in the zeolite suspension is not specifically defined, for which is usable a mineral acid such as sulfuric acid, nitric acid, hydrochloric acid or phosphoric acid, or an organic acid such as acetic acid or oxalic acid. Especially preferred is sulfuric acid. The concentration of the aqueous acid solution is preferably within a range of from 10 to 60 % by mass.
Within the range, the crystal structure of zeolite is not broken, and alumina coating can be attained effectively.
Also preferably, zeolite is suspended in the aqueous acid solution at a temperature falling within a range of from 20 to 80°C, and the zeolite concentration is controlled to fall within a range of from 10 to 35 % by mass.

Next, the alkali for use in the aluminium-containing aqueous alkaline solution includes, for example, sodium hydroxide, ammonia, amine, sodium aluminate, etc.; and sodium aluminate is preferred.
Also preferably, the concentration of the aqueous alkaline solution is within a range of from 1 to 10 % by mass.

In alumina coating, preferably, the zeolite suspension is added to the aluminium-containing aqueous alkali solution with controlling the pH to fall within a range of from 7.0 to 9.5.
Within the pH range, the alumina hydrate formed to coat zeolite is favorably stable.
From the above-mentioned point, the preferred pH range is from 7.5 to 8.0, and the temperature is preferably from 40 to 80°C.
Regarding its crystal morphology, the alumina hydrate to be formed herein is preferably in the form of pseudo boehmite; and the alumina amount in the alumina hydrate to coat zeolite is preferably within a range of from 1 to 20 % by mass, in terms of Al₂O₃ based on the total amount of zeolite and the coating alumina, more preferably from 3 to 15 % by mass.

Next, the porous inorganic oxide except zeolite to constitute the ingredient (b) includes alumina, silica, silica-alumina, titania, alumina-titania, silica-titania, etc.; and of those, especially preferred are alumina, silica and silica-alumina.
Herein, alumina is not specifically defined, and preferred for use herein are γ-alumina, δ-alumina, η-alumina, θ-alumina, χ-alumina, etc.
One or more types of those porous inorganic oxides may be used herein either singly or as combined.

Next, the clay mineral to constitute the ingredient (b) includes kaolin, halloysite, bentonite, etc.; and of those, preferred is kaolin.
One or more types of those clay minerals may be used herein either singly or as combined.
As the ingredient (b), the porous inorganic oxide except zeolite and the clay mineral may be used as combined.

The carrier comprising the above-mentioned ingredient
(a) and ingredient (b) in the desulfurization function-added FCC catalyst of the present invention 1 may be prepared in an ordinary manner, for example, according to a method of spray-drying the ingredient (a) and the ingredient (b). In powdering by spray-drying, for example, the ingredients are dried at 120 to 300°C.

The desulfurization function-added FCC catalyst of the present invention 1 is a catalyst that comprises vanadium supported on the carrier of the ingredient (a) and the ingredient (b), preferably on the powdery carrier, in which, preferably, at least a part of vanadium alone or vanadium combined with any other different metal forms a polynuclear complex salt.
The synergistic effect of the vanadium metal that forms a polynuclear complex salt and the alumina-coated zeolite can effectively prevent vanadium from penetrating into the micropores of zeolite.
In particular, from the viewpoint of the stability of the polynuclear complex salt and the hydrogenation desulfurization capability of vanadium, preferred is a di- to tetra-nuclear complex salt, and more preferred is an isopolyacid salt or heteropolyacid salt of vanadium.

The supported vanadium amount in the desulfurization function-added FCC catalyst of the present invention 1 is preferably within a range of from 500 to 20000 ppm by mass in terms of vanadium metal.
When the supported vanadium amount is at least 500 ppm by mass, then the vanadium-supporting effect, or that is, the desulfurization effect may be enough; and on the other hand, when it is at most 20000 ppm by mass, then the formation of non-intended products such as coke and gas can be prevented and the catalyst is economical.
From the above-mentioned point, the supported vanadium amount is more preferably from 1000 to 10000 ppm by mass.

Desulfurization activity-having vanadium is preferably supported by the use of a supporting solution prepared by mixing a vanadium salt-containing solution and at least one selected from inorganic acids, organic acids and other metal salts.
The vanadium salt for use herein is not specifically defined, for which is usable an organic solvent solution of vanadium naphthenate, vanadium oxide acetylacetonate, vanadyl oxalate or the like. Also usable is an inorganic salt solution of ammonium metavanadate, sodium metavanadate, vanadium oxydichloride, vanadium oxytrichloride, vanadium oxysulfate (vanadyl sulfate) or the like.
Of the above-mentioned vanadium salts, vanadium oxysulfate is especially preferable since it exists much in a solution as a binuclear complex ion by itself, therefore does not penetrate into micropores of zeolite and is supported on the outer surface of zeolite, on a porous inorganic oxide except zeolite or on a clay mineral.

The inorganic acid, organic acid and other metal salt to be added to the supporting solution are effective as forming a polynuclear complex salt of vanadium.
When these are added to the solution, vanadium may form a polynuclear complex salt in the solution, and the salt is supported on the carrier therefore forming a polynuclear complex salt of vanadium on the catalyst.
For forming a di- to tetra-nuclear complex salt on the catalyst or forming an isopolyacid salt or heteropolyacid salt of vanadium, it is desirable that a polynuclear complex salt of the same morphology is formed also in the solution.

Not specifically defined, the inorganic acid for forming a polynuclear complex salt of vanadium includes sulfuric acid, hydrochloric acid, phosphoric acid, nitric acid, perchloric acid, boric acid, pyrophosphoric acid, etc.; and especially preferred are sulfuric acid and phosphoric acid from the viewpoint of preventing unit corrosion and environmental pollution.
Sulfuric acid is preferred as forming a stable compound with a vanadium ion.
One or more types of such inorganic acids may be used either singly or as combined.
Preferably, the amount of the inorganic acid to be added is so controlled that the pH of the vanadium salt solution could be from 1.5 to 7.
As phosphoric acid, orthophosphoric acid or phosphorous acid may be used, but more preferred is orthophosphoric acid.
The amount of phosphorus is preferably within a range of from 1000 to 20000 ppm by mass relative to the catalyst. The phosphorus amount of at least 1000 ppm by mass is favorable in point of the catalyst activity; and on the other hand, when the amount is at most 20000 ppm by mass, the viscosity does not increase too much in vanadium/phosphorus complex formation and the vanadium can be secured to be supported uniformly.
From the above-mentioned point, the phosphorus amount is more preferably from 2000 to 15000 ppm by mass.

The organic acid for forming the polynuclear complex salt of vanadium includes oxalic acid, acetic acid, citric acid, glutamic acid, gluconic acid, stearic acid, formic acid, tartaric acid, benzoic acid, succinic acid, salicylic acid, aspartic acid, ascorbic acid, acetylsalicylic acid, amino acid, etc.
One or more such organic acids may be used either singly or as combined.
The amount of the organic acid to be added is preferably within a range of from 1000 to 20000 ppm by mass relative to the catalyst, more preferably within a range of from 2000 to 15000 ppm by mass.
In the present invention 1, of the above-mentioned organic acids, citric acid is preferred to bring about the effect of the present invention 1.

The other metal salt for forming the polynuclear complex salt of vanadium includes various salts such as salts of manganese, magnesium, calcium, cobalt, zinc, copper, titanium, aluminium, nickel, iron, chromium, lanthanum, yttrium, scandium, niobium, tantalum, molybdenum, tungsten or the like, and the metal salt is mixed with a vanadium salt.
One or more such metal salts may be used either singly or as combined.
The content of the other metal salt (in terms of metal) is preferably within a range of from 500 to 30000 ppm by mass relative to the catalyst, more preferably within a range of from 1000 to 20000 ppm by mass.
The above-mentioned inorganic acids, organic acids and other metal salts may be used, as combined.

The manganese salt includes manganese(II) sulfate, manganese(II) ammonium sulfate, manganese(II) nitrate, manganese(II) carbonate, manganese(II) acetate, manganese(III) acetate, manganese(II) oxalate, manganese(II) chloride, manganese dichloride, manganese(II) formate, potassium permanganate, manganese(II) borofluoride, manganese phthalocyanine, manganese(II) salicylate, manganese(II) bromide, manganese(II) tetrafluoroborate, manganese(II) benzoate, manganese disodium ethylenediaminetetraacetate, etc.
Of those, preferred are manganese(II) sulfate, manganese (II) ammonium sulfate and manganese (II) acetate; and more preferred is manganese(II) sulfate.
When complexed, vanadium and manganese form a morphology of a larger compound and could not penetrate into the pores of zeolite.
In particular, a combination of vanadium oxysulfate and manganese sulfate is favorable because most of them exist in a solution as a binuclear complex ion, not penetrate into the micropores of zeolite and are supported on the outer surface of zeolite and on the porous inorganic oxide except zeolite, etc.

The magnesium salt includes magnesium nitrate, magnesium sulfate, magnesium ammonium sulfate, magnesium bromide, magnesium ammonium phosphate, magnesium phosphate, magnesium oxide, magnesium hydroxide, etc.
The calcium salt includes calcium nitrite, calcium sulfite, calcium chloride, calcium formate, calcium citrate, calcium nitrate, calcium carbonate, calcium sulfate, calcium phosphate, calcium oxide, calcium hydroxide, etc.
The cobalt salt includes cobalt chloride, cobalt acetate, cobalt nitrate, cobalt carbonate, cobalt sulfate, cobalt ammonium sulfate, cobalt oxide, cobalt hydroxide, etc.

The zinc salt includes zinc chloride, zinc ammonium chloride, zinc chloride citrate, zinc acetate, zinc bromide, zinc oxalate, zinc nitrate, zinc carbonate, zinc sulfate, zinc phosphate, zinc oxide, zinc sulfide, zinc peroxide, etc.
The copper salt includes copper chloride, copper ammonium chloride, copper acetate, copper oxide, copper bromide, copper nitrate, copper carbonate, copper sulfate, copper phosphide, copper hydroxide, copper sulfide, etc.
The titanium salt includes titanium chloride, titanium trichloride, titanium tetrachloride, titanium sulfate, titanium dioxide, titanium oxide, etc.
The aluminium salt includes aluminium chloride, aluminium acetate, aluminium bromide, aluminium nitrate, aluminium sulfate, aluminium ammonium sulfate, aluminium phosphate, aluminium borate, aluminium hydroxide, etc.

The nickel salt includes nickel chloride, nickel citrate, nickel acetate, nickel nitrate, nickel hydroxide, nickel carbonate, nickel sulfate, nickel ammonium sulfate, nickel oxide, nickel hydroxide, nickel sulfide, etc.
The iron salt includes iron chloride, ammonium iron citrate, iron ammonium citrate, iron nitrate, ammonium iron sulfate, iron nitrate, iron phosphate, iron sulfate, iron hydroxide, etc.
The chromium salt includes chromium chloride, chromium acetate, chromium bromide, chromium nitrate, chromium hydroxide, ammonium chromium sulfate, chromium sulfate, chromium ammonium sulfate, chromium phosphate, etc.

The lanthanum salt includes lanthanum chloride, lanthanum acetate, lanthanum nitrate, lanthanum carbonate, lanthanum hydroxide, etc.
The yttrium salt includes yttrium chloride, yttrium acetate, yttrium nitrate, yttrium carbonate, etc.
The scandium salt includes scandium chloride, scandium acetate, scandium nitrate, scandium carbonate, etc.
The niobium salt includes niobium pentachloride, niobium chloride, niobium isopropoxide, niobium ethoxide, etc.
The tantalum salt includes, tantalum pentachloride, tantalum chloride, tantalum isopropoxide, tantalum ethoxide, tantalum methoxide, etc.

The molybdenum salt includes molybdenum chloride, molybdenum oxide, molybdenum trioxide, hexa-ammonium hepta-molybdate, ammonium molybdate, ammonium phosphoromolybdate, molybdic acid, molybdenum disulfide, etc.
The tungsten salt includes tungsten chloride, silicotungstic acid, ammonium tungstate, tungsten oxide, tungsten trioxide, ammonium phosphotungstate, tungstic acid, phosphotungstic acid, tungsten hexachloride, etc.

Preferably, the desulfurization function-added FCC catalyst of the present invention 1 carries, if desired, a rare earth element such as lanthanum, cerium or the like in an amount of from 5000 to 25000 ppm by mass, for imparting stability, especially hydrothermal stability to the catalyst and for enhancing the cracking activity of the catalyst.

The desulfurization function-added FCC catalyst of the present invention 1 can be obtained by applying a supporting solution prepared by mixing at least one selected from inorganic acids, organic acids and other metal salts in a vanadium salt-containing solution, to the above-mentioned carrier comprising the ingredient (a) and the ingredient (b), as so mentioned in the above.
Various methods may be employed for the application, for example, an ordinary pressure infiltration method, a vacuum infiltration method, a dipping method, etc.
Of those, an ordinary pressure infiltration method is preferred. Preferably, the temperature of the supporting solution is within a range of from room temperature to 100°C, more preferably within a range of from room temperature to 50°C.

After infiltrated and supported, the catalyst is dried and then optionally baked.
The drying temperature may be generally within a range of from 70 to 300°C.
When the drying temperature is not higher than 300°C, the supported vanadium, or the supported complex of vanadium and inorganic acid, vanadium and organic acid or vanadium and other metal salt does not aggregate, and they may be in an optimum condition.
When the drying temperature is not lower than 70°C, water can be fully removed and therefore the compound or complex may be in an optimum condition.
From the above-mentioned point, the drying temperature is more preferably within a range of from 100 to 150°C.
Only by drying, the desulfurization function-added FCC catalyst of the present invention 1 can have sufficient activity, but if desired, it may be baked.
The calcination may be done after the drying, generally at a temperature of from 500 to 900°C or so.
The calcination may be done as a steam treatment in the presence of oxygen and water vapor, or may also be done in the presence of oxygen or air.

The desulfurization function-added FCC catalyst of the present invention 2 is a catalyst having vanadium supported on a carrier containing (a) an alumina-coated zeolite and (b)alumina, wherein the vanadium concentration ratio (before ground/after ground), as measured according to X-ray photo-electronic spectrometry (hereinafter referred to as "XPS") before and after grinding the catalyst, is at least 2.
XPS is a method of surface analysis, which is for quantitatively determining the content of the element on the outer surface of the catalyst carrier.
Accordingly, in the catalyst before ground, the amount of vanadium supported on the outer surface of the catalyst carrier can be determined through XPS. Accordingly, under the condition that the amount of the supported vanadium is the same, the apparent supported vanadium amount should be larger when vanadium is selectively supported on the outer surface.
On the other hand, vanadium supported inside the micropores of zeolite is not detected by XPS as vanadium does not exist on the surface.
The macropores to be described in detail hereinunder are formed by the space between the primary particles of the carrier, alumina-coated zeolite or alumina, and vanadium supported inside the macropores can be detected by XPS as vanadium supported on the outer surface.

As opposed to this, in case where the catalyst is ground, zeolite therein is broken and vanadium having existed inside the micropores of zeolite go out of the pores, while, on the other hand, vanadium is not selectively supported on the outer surface but is nearly mixed with the carrier; and therefore, the amount of vanadium to be detected through XPS is near to all the vanadium content which really exist.
Accordingly, the ratio of the vanadium concentration (before ground/after ground) through XPS before and after grinding is the most suitable index which determine the amount ratio of vanadium existing on the outer surface of the carrier. The desulfurization function-added FCC catalyst of the present invention 2 has the concentration ratio of at least 2.
The constitution of the desulfurization function-added FCC catalyst of the present invention 2 is described in detail hereinunder.

First, the carrier of the desulfurization function-added FCC catalyst of the present invention 2 contains (a) alumina-coated zeolite and (b) alumina.
Herein , the ingredient (a) is zeolite coated with alumina, like in the present invention 1.
Zeolite includes Y-type zeolite, rare earth exchanged Y-type zeolite, USY-type zeolite, rare earth exchanged USY-type zeolite, β-type zeolite, ZSM-5, L-type zeolite, etc. ; and from the viewpoint of the cracking activity and the stability of the catalyst, especially preferred are Y-type zeolite, rare earth exchanged Y-type zeolite, USY-type zeolite and rare earth exchanged USY-type zeolite.
One or more types of zeolite may be used either singly or as combined.

The content of the non-framework alumina (NFA) in the zeolite is preferably at least 2.0 % by mass, like in the present invention 1.
When the non-framework alumina content is at least 2.0 % by mass, the amount of alumina to coat zeolite in alumina-coating may be enough, therefore sufficiently exhibiting the effect of the present invention.
The preferred content of the non-framework alumina (NFA) is from 2.0 to 17.0 % by mass, more preferably from 3.3 to 8.8 % by mass.
The non-framework alumina is meant to indicate alumina except the alumina to constitute the zeolite skeleton (framework alumina: FA) of all alumina in zeolite; and the amount of the non-framework alumina (NFA) is computed according to a formula, 100 x {(amount of all alumina in zeolite) - (FA content)} /mass of zeolite (% by mass).
The non-framework alumina may be formed, for example, by steaming after ion-exchange of zeolite into an ammonium-type one, whereby a part of alumina constituting the zeolite skeleton is released from the skeleton without breaking the crystal structure of zeolite.

In the present invention 2, the crystallinity of zeolite for use for the ingredient (a) is preferably at least 80 %, like in the present invention 1.
The crystallinity of zeolite of at least 80 % may bring about sufficient cracking activity.
From the above-mentioned point, the crystallinity is more preferably at least 90 %.

Not specifically defined, the alumina to coat zeolite is preferably alumina hydrate having a pseudo-boehmite crystal morphology.
The amount of the alumina hydrate to coat zeolite is preferably within a range of from 1 to 20 % by mass in terms of Al₂O₃, based on the total amount of zeolite and the coating alumina, more preferably within a range of from 3 to 15 % by mass.
When the alumina coating amount is at least 1 % by mass, vanadium may be prevented from penetrating into the micropores of zeolite and therefore zeolite may be prevented from being broken by vanadium, and in addition, since vanadium can be supported by the micropores, the catalyst can exhibit high desulfurization activity.
When the alumina coating amount is at most 20 % by mass, then the acid points of zeolite are not coated more than required, and the catalyst may keep high cracking activity.
From the above-mentioned viewpoint, the alumina coating amount is preferably within a range of from 3 to 15 % by mass.

The method for coating zeolite with alumina is not specifically defined. Like in the present invention 1, for example, zeolite is suspended in an aqueous acid solution, and the suspension is added to an aluminium-containing aqueous alkali solution separately prepared, whereby zeolite can be coated with alumina.
The acid to be used in the zeolite suspension is not specifically defined, for which is usable a mineral acid such as sulfuric acid, nitric acid, hydrochloric acid or phosphoric acid, or an organic acid such as acetic acid or oxalic acid. Especially preferred is sulfuric acid. The concentration of the aqueous acid solution is preferably within a range of from 10 to 60 % by mass.
Within the range, the crystal structure of zeolite is not broken, and alumina coating can be attained effectively.
Also preferably, zeolite is suspended in the aqueous acid solution at a temperature falling within a range of from 20 to 80°C, and the zeolite concentration is controlled to fall within a range of from 10 to 35 % by mass.

Next, like in the present invention 1, the alkali for use in the aluminium-containing aqueous alkaline solution includes, for example, sodium hydroxide, ammonia, amine, sodium aluminate, etc.; and sodium aluminate is preferred.
Also preferably, the concentration of the aqueous alkaline solution is within a range of from 1 to 10 % by mass.

In alumina coating, preferably, the zeolite suspension is added to the aluminium-containing aqueous alkali solution with controlling the pH to fall within a range of from 7.0 to 9.5, like in the present invention 1.
Within the pH range, the alumina hydrate formed to coat zeolite is favorably stable.
From the above-mentioned point, the preferred pH range is from 7.5 to 8.0, and the temperature is preferably from 40 to 80°C.

Preferably, the zeolite carries, if desired, a rare earth element such as lanthanum, cerium or the like in an amount of from 0.5 to 10 % by mass, for imparting stability, especially hydrothermal stability to the catalyst and for enhancing the cracking activity of the catalyst.
Various methods may be employed for applying the element, for example, an infiltration method, an ion exchange method or the like. Preferably, the application is attained according to an ion exchange method from the viewpoint of high activation of the catalyst owing to high dispersion of the rare earth element, and the efficiency and the economical advantage in catalyst preparation.

The alumina to constitute the ingredient (b) is not specifically defined, for which preferably used are γ-alumina, 5-alumina, η-alumina, θ-alumina, χ-alumina, etc . One or more of these may be used either singly or as combined.

The desulfurization function-added FCC catalyst of the present invention 2 may contain any other porous inorganic oxide or clay mineral in addition to the above (a) zeolite and (b) alumina.
The porous inorganic oxide includes silica, silica-alumina, titania, alumina-titania, silica-titania, etc.; and of those, especially preferred are silica and silica-alumina.
The clay mineral includes kaolin, halloysite, bentonite, etc.; and of those, preferred is kaolin.
The other porous inorganic oxide or the clay mineral may be combined for use herein.

Regarding the content of the ingredient (a) and the ingredient (b) in the carrier, the ingredient (a) is within a range of from 5 to 40 % by mass, and the ingredient (b) is within a range of from 30 to 70 % by mass.
When the ingredient (a) and the ingredient (b) fall within the above range, the catalyst can exhibit sufficient cracking activity and the carrier can exhibit its effect enough for the desulfurization active ingredient, vanadium.
From the above-mentioned viewpoint, the content of the ingredient (a) in the carrier is preferably within a range of from 10 to 30 % by mass, and the ingredient (b) is preferably within a range of from 30 to 60 % by mass.
The carrier containing the ingredient (a) and the ingredient (b) may be prepared according to an ordinary method, for example, a spray drying method.
In a powder making process by spray drying, for example, the drying temperature is from 120 to 300°C.

The amount of vanadium to be supported in the desulfurization function-added FCC catalyst of the present invention 2 is preferably from 500 to 20000 ppm by mass in terms of vanadium metal, like in the present invention 1.
When the supported vanadium amount is at least 500 ppm by mass, the vanadium-supporting effect, or that is, the desulfurization effect may be enough. When the amount is at most 20000 ppm by mass, the formation of non-intended products such as coke and gas can be prevented and the catalyst is economical.
From the above-mentioned point, the supported vanadium amount is more preferably from 1000 to 10000 ppm by mass.

The desulfurization function-added FCC catalyst of the present invention 2 preferably contains manganese and/or phosphorus in addition to vanadium.
The content of manganese and phosphorus is preferably from 500 to 20000 ppm by mass and from 100 to 7000 ppm by mass, respectively, in terms of manganese metal and in terms of phosphorus atom.
When the manganese content is at least 500 ppm by mass, the catalyst may exhibit a sufficient desulfurization effect; and when it is at most 20000 ppm by mass, the formation of non-intended products such as coke and gas can be prevented and the catalyst is economical.
From the above-mentioned point, the manganese content is preferably from 1000 to 10000 ppm by mass.
On the other hand, when the phosphorus content is at least 100 ppm by mass, it is favorable in point of the catalyst activity; and when it is at most 7000 ppm by mass, the viscosity of the supporting solution does not increase too much and vanadium can be supported uniformly on the carrier.
From the above-mentioned point, the phosphorus content is more preferably from 200 to 4000 ppm by mass.

In supporting vanadium, manganese and phosphorus, the supporting solution to be used may be one containing vanadyl sulfate, manganese sulfate and aqueous phosphoric acid solution, and the pH of the supporting solution is preferably controlled to be from 2 to 4.
When such a supporting solution is used, vanadium, manganese and phosphorus do not penetrate into the micropores of zeolite but are supported inside the macropores of the carrier.
As phosphoric acid, usable are orthophosphoric acid and phosphorous acid; preferred is orthophosphoric acid as forming a complex ion with vanadium.

For supporting vanadium, manganese and phosphorus, various methods may be employed, for example, an ordinary pressure infiltration method, a vacuum infiltration method, a dipping method, etc.
Of those, preferred is an ordinary pressure infiltration method; and the temperature of the supporting solution is preferably within a range of from room temperature to 100°C, more preferably within a range of from room temperature to 50°C.

After infiltrated and supported, the carrier is dried. Preferably, however, it is not baked at a temperature higher than 300°C for preventing aggregation of metal such as vanadium, etc.
The drying temperature is generally within a range of from 70 to 300°C.
When the drying temperature is not higher than 300°C, the metal such as vanadium does not aggregate and the catalyst can exhibit high desulfurization activity.
When the drying temperature is not lower than 70°C, water removal may be enough.
From the above-mentioned point, the drying temperature is more preferably from 100 to 150°C.

The desulfurization function-added FCC catalyst of the present invention 3 is a catalyst that comprises at least vanadium and manganese and/or phosphorus supported on a porous inorganic oxide-containing carrier.
Not specifically defined, the porous inorganic oxide to constitute the carrier may be any porous inorganic oxide generally usable as a catalyst carrier, including, for example, zeolite, alumina, silica, silica-alumina, titania, alumina-titania, silica-titania and clay minerals such as kaolin, halloysite, bentonite, etc.
One or more of these may be used either singly or as combined.

Of the above-mentioned carrier, especially preferred is a zeolite-containing one from the viewpoint of imparting sufficient cracking activity to the catalyst.
Like in the present invention 1 and 2, zeolite includes Y-type zeolite, rare earth exchanged Y-type zeolite, USY-type zeolite, rare earth exchanged USY-type zeolite, β-type zeolite, ZSM-5, L-type zeolite, etc.; and from the viewpoint of the cracking activity and the stability of the catalyst, especially preferred are Y-type zeolite, rare earth exchanged Y-type zeolite, USY-type zeolite and rare earth exchanged USY-type zeolite.
One or more types of zeolite may be used either singly or as combined.

Like in the present invention 1 or 2, the crystallinity of zeolite used in the present invention 3 is preferably at least 80 %.
When the crystallinity of zeolite is at least 80 %, the catalyst exhibits sufficient cracking activity.
From the above-mentioned viewpoint, the crystallinity of zeolite is more preferably at least 90 %.

The carrier used in the desulfurization function-added FCC catalyst of the present invention 3 preferably comprises, in addition to zeolite, any other porous inorganic oxide except zeolite; and as the porous inorganic oxide, preferred is alumina or silica as having many middle size pores and macropores, suitably containing a solid acid, and having a suitable surface area falling within a range of from 50 to 300 m²/g.
Not specifically defined, alumina is preferably γ-alumina, δ-alumina, η-alumina, θ-alumina, χ-alumina, etc.
Preferably, the carrier contains a clay mineral because it may enhance the mechanical strength of the catalyst and may suitably disperse zeolite, alumina and others, and it does not almost contain a solid acid.

Of the above-mentioned preferred carrier ingredients, zeolite is preferably within a range of from 5 to 40 % by mass, and alumina, silica and the clay mineral are preferably within a range of from 5 to 40 % by mss, from 3 to 20 % by mass and from 10 to 50 % by mass, respectively.

The carrier used in the desulfurization function-added FCC catalyst of the present invention 3 may be prepared, for example according to an ordinary method of mixing zeolite, alumina, silica and a clay mineral in slurry and spray-drying the slurry mixture.
In a powder making process by spray-drying, for example, the drying of the mixture may be done at the temperature from 120 to 300°C.

Next, in the desulfurization function-added FCC catalyst of the present invention 3, vanadium is an indispensable ingredient, and the supported vanadium amount in the catalyst is within a range of from 500 to 20000 ppm by mass in terms of vanadium metal.
When the supported vanadium amount is less than 500 ppm by mass, the catalyst could not enjoy the vanadium supporting effect, or that is, a sufficient desulfurization activity; and when it is more than 20000 ppm by mass, unintended products such as coke and gas may be formed and the catalyst could not be economical.
From the above-mentioned point, the supported vanadium amount is more preferably from 1000 to 10000 ppm by mass.

The desulfurization function-added FCC catalyst of the present invention 3 contains manganese and/or phosphorus in addition to vanadium.
Specifically, the catalyst comprises at least two ingredients, vanadium and manganese, or vanadium and phosphorus supported on a porous inorganic oxide-containing carrier, or comprises at least three ingredients of vanadium, manganese and phosphorus supported on the carrier.
The content of manganese and phosphorus contained in the catalyst is preferably from 500 to 20000 ppm by mass and from 100 to 7000 ppm by mass, respectively, in terms of manganese metal and in terms of phosphorus atom.
When the manganese content is at least 500 ppm by mass, the catalyst may exhibit a sufficient desulfurization effect; and when it is at most 20000 ppm by mass, the formation of non-intended products such as coke and gas can be prevented and the catalyst is economical.
From the above-mentioned point, the manganese content is preferably from 500 to 10000 ppm by mass.
On the other hand, when the phosphorus content is at least 100 ppm by mass, it is favorable in point of the catalyst activity; and when it is at most 7000 ppm by mass, the viscosity of the supporting solution does not increase too much in vanadium-phosphorus complex formation and vanadium can be supported uniformly on the carrier.
From the above-mentioned point, the phosphorus content is more preferably from 500 to 5000 ppm by mass.

In supporting vanadium, manganese and phosphorus in the desulfurization function-added FCC catalyst of the present invention 3, it is important that vanadium and manganese and/or phosphorus are formed into a complex ion in a supporting solution.
The vanadium salt to be used as the vanadium metal source is not specifically defined. Like in the present invention 1, usable is an organic solvent solution of vanadium naphthenate, acetylacetovanadium, vanadium oxide acetylacetonate, vanadyl oxalate, vanadium oxide stearate or the like; and also usable is an inorganic salt solution of ammonium metavanadate, sodium metavanadate, vanadium oxydichloride, vanadium oxytrichloride, vanadium oxysulfate (vanadyl sulfate), vanadium boride, vanadium bromide, vanadium chloride, vanadium fluoride, vanadium sulfide or the like.
Of the above-mentioned vanadium salts, vanadium oxysulfate is especially favorable as existing much in a solution as a binuclear complex ion by itself, not penetrating into the micropores of zeolite but supported on the outer surface of zeolite and on the porous inorganic oxide except zeolite.

Like in the present invention 1, the manganese salt for use as the manganese metal source includes manganese(II) sulfate, manganese(II) ammonium sulfate, mangaraese(II) nitrate, manganese(II) carbonate, manganese phosphate, manganese(II) acetate, manganese(III) acetate, manganese(II) oxalate, manganese(II) chloride, manganese dichloride, manganese (II) formate, potassium permanganate, manganese (II) borofluoride, manganese phthalocyanine, manganese(II) salicylate, manganese(II) bromide, manganese(II) tetrafluoroborate, manganese(II) benzoate, manganese disodium ethylenediaminetetraacetate, manganese naphthenate, etc.
Of those, preferred are manganese(II) sulfate, manganese (II) ammonium sulfate and manganese (II) acetate; and more preferred is manganese(II) sulfate.
When complexed, vanadium and manganese form a morphology of a larger compound and could not penetrate into the pores of zeolite.
In particular, a combination of vanadium oxysulfate and manganese sulfate is favorable as existing in a solution as a binuclear complex ion, not penetrating into the micropores of zeolite but supported on the outer surface of zeolite and on the porous inorganic oxide except zeolite.

Phosphoric acid is preferred as the phosphorus source, for which usable are orthophosphoric acid, phosphorous acid, etc. More preferred is orthophosphoric acid as readily forming a complex ion with vanadium.
When phosphorus is added, the pH of the system is preferably controlled to be from 1.5 to 7 for facilitating the complex ion formation.

As described in the above, vanadium and manganese and/or phosphorus form a complex ion in a supporting solution, and the permeability of the complex ion through a reverse osmosis membrane is at most 25 % relative to the permeability of vanadium through the reverse osmosis membrane.
The permeability through a reverse osmosis membrane can be determined, for example, by pressure filtration with Nitto Denko Matex Co., Ltd. 's "NTR-7450HG" followed by measurement of the ion permeability.
In the present invention 3, it is important that the permeability of the complex ion through a reverse osmosis membrane is at most 25 % relative to the permeability of vanadium ion through the reverse osmosis membrane.
Specifically, in the desulfurization function-added FCC catalyst of the present invention 3, at least a part of vanadium metal effectively forms a polynuclear complex salt with manganese ion and/or phosphorus ion in the production process, therefore having a morphology hardly penetrable through a reverse osmosis membrane.
This indicates that the complex salt hardly penetrates into the catalyst carrier, or that is, vanadium as a desulfurization active point is prevented from penetrating into the micropores of zeolite.

Preferably in the desulfurization function-added FCC catalyst of the present invention 3, if desired, a rare earth element such as lanthanum, cerium or the like is supported in an amount of from 0.5 to 5 % by mass, for imparting stability, especially hydrothermal stability to the catalyst and for enhancing the cracking activity of the catalyst.
The supporting method is not specifically defined, usable is an infiltration method, an ion exchange method or the like.

The desulfurization function-added FCC catalyst of the present invention 3 can be obtained by applying a supporting solution that contains a vanadium salt, a manganese salt and/or phosphorus to the above-mentioned carrier, as so mentioned in the above.
Various methods may be employed for the application, for example, an ordinary pressure infiltration method, a vacuum infiltration method, a dipping method, etc.
Of those, an ordinary pressure infiltration method is preferred as capable of efficiently infiltrating vanadium, manganese and phosphorus into the mesopores or macropores (hereinafter the term "macropores" is meant to include macropores and mesopores) of the inorganic porous carrier; and the temperature of the supporting solution is preferably within a range of from room temperature to 100°C, more preferably within a range of from room temperature to 50°C.

After infiltrated and supported, the catalyst is dried and then optionally baked.
The drying temperature may be generally within a range of from 70 to 300°C.
When the drying temperature is not higher than 300°C, the supported vanadium, or the supported vanadium-manganese, vanadium-phosphorus or vanadium-manganese-phosphorus does not aggregate, and they may have an optimum compound or complex condition.
When the drying temperature is not lower than 70°C, water can be fully removed therefore producing an optimum compound or complex condition.
From the above-mentioned point, the drying temperature is more preferably within a range of from 100 to 150°C.
Only by drying, the desulfurization function-added FCC catalyst of the present invention 3 can have sufficient activity, but if desired, it may be baked.
The calcination may be done after the drying, generally at a temperature of from 500 to 900°C or so.
The calcination may be done as a steam treatment in the presence of oxygen and water vapor, or may also be done in the presence of oxygen or air.

The acid amount in the desulfurization function-added FCC catalyst of the present invention 1 is preferably within a range of from 20 to 450 µmol/g.
When the acid amount is at least 20 µmol/g, sulfur compounds may be fully cracked for desulfurization; and when it is at most 450 µmol/g, formation of unintended products such as gas and coke owing to too much promoted cracking can be prevented and the catalyst is economical.
From the above-mentioned point, the acid amount is more preferably within a range of from 100 to 400 µmol/g, even more preferably within a range of from 200 to 350 µmol/g.

Preferably, the acid amount in the desulfurization function-added FCC catalyst of the present invention 2 or 3 is within a range of from 200 to 400 µmol/g. When the acid amount is at least 200 µmol/g, sulfur compounds may be fully cracked for desulfurization; and when it is at most 400 µmol/g, formation of unintended products such as gas and coke owing to too much promoted cracking can be prevented and the catalyst is economical.
From the above-mentioned point, the acid amount is more preferably within a range of from 250 to 350 µmol/g.

The acid amount as referred to herein is determined as follows: Based on the phenomenon that a basic gas (ammonia, pyridine) is strongly adsorbed on the acid point of the catalyst, the intensity of the acid point is determined from the heat of adsorption, and at the same time the acid amount is obtained from the adsorption amount.
In the present invention 1, 2 or 3, the acid amount is determined according to differential heat of ammonia adsorption calorimetry. On an differential heat of ammonia adsorption curve, the amount of the acid point indicating a heat of ammonia adsorption of at least 100 KJ/mol is the acid amount.
Concretely, the acid amount is measured according to the following method.

### <Measurement of Acid Amount>

Ammonia is adsorbed by the catalyst, and the heat of adsorption is directly measured with a calorimeter (Tokyo Rikosha Co., Ltd.'s "High-Temperature Calorimetric Surface Analyzer CSA-450G"), and the adsorption amount is determined from the pressure change. A point indicating a differential heat of ammonia adsorption of at least 100 kJ/mol is read, and its amount is computed as the acid amount.

The desulfurization function-added FCC catalyst of the present invention 1, 2 or 3 has mesopores and macropores (hereinafter simply referred to as "macropores").
When the primary particles of the carrier aggregate to give secondary particles, macropores are formed in the space between the primary particles. Macropores include mesopores, and are larger than micropores of zeolite.

The macropores in the desulfurization function-added FCC catalyst of the present invention 1 have a pore diameter falling within a range of from 20 to 1000 A, and preferably, the peak position of the pore diameter is between 20 and 500 A and the peak shape is single.
More preferably, the peak position of the pore diameter is between 90 and 300 A.
Also preferably, the pore volume of the pores having a pore diameter of from 40 to 400 A is within a range of from 0.05 to 0.5 ml/g.
When the pore volume is within the range, the metal such as vanadium can be fully supported on the carrier and the catalyst can have sufficient mechanical strength.

Further, the surface area of the macropores is preferably from 30 to 150 m²/g.
When the surface area of the macropores is at least 30 m²/g, raw oil can be fully cracked to secure the yield of FCC gasoline, and the catalyst can secure a sufficient degree of desulfurization.
When the surface area is at most 150 m²/g, the amount of large pores may not be too large and the cracking activity is not lowered and a sufficient degree of desulfurization can be attained.
From the above-mentioned point, the surface area of the macropores is more preferably within a range of from 40 to 120 m²/g.

The macropores in the desulfurization function-added FCC catalyst of the present invention 2 or 3 have a pore diameter falling within a range of from 20 to 1000 A, and preferably, the peak position of the pore diameter is between 20 and 500 A and the peak shape is single.
More preferably, the peak position of the pore diameter is between 90 and 300 A.
Also preferably, the pore volume of the pores having a pore diameter of from 40 to 400 A is within a range of from 0.05 to 0.5 ml/g.
When the pore volume is within the range, the metal such as vanadium can be fully supported on the carrier and the catalyst can have sufficient mechanical strength.

Further, the surface area of the macropores is preferably from 50 to 150 m²/g.
When the surface area of the macropores is at least 50 m²/g, raw oil can be fully cracked to secure the yield of FCC gasoline, and the catalyst can secure a sufficient degree of desulfurization.
When the surface area is at most 150 m²/g, the amount of large pores may not be too large and the cracking activity is not lowered and a sufficient degree of desulfurization can be attained.
From the above-mentioned point, the surface area of the macropores is more preferably within a range of from 60 to 120 m²/g_{.}
In the present invention 1, 2 or 3, the surface area of the pores are obtained by subtracting the t-plot microsurface area from the surface area measured at a nitrogen relative pressure (P/P₀) = 0.3 in a BET multi-point method.

The desulfurization function-added FCC catalyst of the present invention 1 or 2 preferably contains a FCC equilibrium catalyst (hereinafter simply referred to as "equilibrium catalyst") having a vanadium and nickel accumulated amount of from 50 to 20000 ppm by mass, in an amount of from 0 to 98 % by mass based on the total amount of the catalyst (hereinafter referred to as "mixed catalyst").
More preferably, the equilibrium catalyst is contained in an amount of from 20 to 98 % by mass.
The desulfurization function-added FCC catalyst of the present invention 3 preferably contains the equilibrium catalyst in an amount of from 0 to 98 % by mass based on the total amount of the catalyst.
Preferably, the content of the equilibrium catalyst is at most 98 % by mass, or that is, the content of the desulfurization function-added FCC catalyst is at least 2 % by mass.
When the content of the desulfurization function-added FCC catalyst is at least 2 % by mass, the mixed catalyst may have sufficient desulfurization capability.
From the above-mentioned point, more preferably, the content of the equilibrium catalyst is within a range of from 70 to 95 % by mass.

Herein, the equilibrium catalyst is a catalytic cracking catalyst generally used in FCC unit, and it is a catalyst formed by completely mixing and homogenizing all the catalyst which comprises new catalyst and the catalyst having reached its life in FCC unit.
The vanadium and nickel accumulated amount in the equilibrium catalyst for use in the present invention 1, 2 or3 is preferably within a range of from 50 to 20000 ppm by mass.
When the vanadium and nickel accumulated amount is at least 50 ppm by mass, the catalyst may exhibit sufficient hydrogenation capability and may provide a high degree of desulfurization.
When the amount is at most 20000 ppm by mass, the catalyst is prevented from being poisoned by vanadium and nickel and therefore may exhibit sufficient cracking activity.
From the above-mentioned point, the vanadium and nickel accumulated amount is preferably within a range of from 100 to 10000 ppm by mass.

Specific examples of the equilibrium catalyst include catalysts comprising zeolite such as REUSY, USY, REY or the like, alumina, silica, titania, silica-alumina, alumina-silica, clay mineral such as kaolin, halloysite or the like, and having a vanadium and nickel accumulated amount within a range of from 100 to 10000 ppm by mass.

Next, a method for producing low-sulfur FCC gasoline of the present invention 1, 2 or 3, comprising catalytically cracking heavy oil by the use of the above-mentioned desulfurization function-added FCC catalyst of the present invention or mixed catalyst, is described in detail hereinunder.
In the method for producing low-sulfur FCC gasoline of the present invention 1, 2 or 3, raw oil is cracked and desulfurized at the same time in FCC unit.
Feed oil may be heavy oil, such as desulfurized heavy oil, heavy gas oil, vacuum gas oil, deasphalted gas oil, ordinary-pressure residual oil, etc.
More precisely,desulfurized atmospheric resid (DSRC) supplied from resid hydrodesulfurization unit (RH) and other heavy fraction-rich feed oil may be used as feed oil, and in such a case, resid FCC unit (RFCC) may be used.
In addition, desulfurized heavy gas oil (VHHGO) and desulfurized vacuum gas oil (VHVGO) obtained through desulfurization of heavy gas oil, vacuum gas oil or the like in an indirect hydrodesulfurization unit (VH) may be used as feed oil, and in such a case, FCC unit (FCC) may be used.
Further, deasphalted oil (DAO) obtained from solvent deasphaltation unit (SDA) may also be used as feed oil.
Two or more different types of the above-mentioned feed oils may be mixed and supplied to the processing unit.

Of the above-mentioned feed oil, most preferred are desulfurized heavy oil and desulfurized heavy gas oil in which the sulfur compounds have an easily-desulfurizable structure, desulfurization reaction can be easily brought about in FCC unit thereby to efficiently give low-sulfur FCC gasoline.
The hydrogenation and desulfurization method for heavy oil or heavy gas oil is not specifically defined, for which employable is any method heretofore generally used for hydrogenation and desulfurization of heavy oil or heavy gas oil.
For example, employable is a method of hydrogenation and desulfurization under the condition of a reaction temperature of from 300 to 450°C or so, a hydrogen partial pressure of from 3 to 20 MPa·G or so, and LHSV (liquid hourly space velocity) of from 0.1 to 2.0 hr⁻¹ or so, using a catalyst of one or more of metals of the Group 6 of the Periodic Table such as Mo and W and metals of the group 8 of the Periodic Table such as Co and Ni, more concretely Co-Mo or Ni-Mo supported on a carrier such as alumina, silica, zeolite or their mixture supported on a carrier.

In the present invention 1, 2 or 3, feed oil such as desulfurized heavy oil, desulfurized heavy gas oil or desulfurized vacuum gas oil preferably has a sulfur content of from 0.03 to 0.7 % by mass or so, more preferably within a range of from 0.05 to 0.5 % by mass or so.

Not specifically defined, the condition for processing feed oil in the method for producing low-sulfur FCC gasoline of the present invention 1, 2 or 3 may fall within a range capable of exhibiting the effect of the present invention 1, 2 or 3; and for example, the reaction temperature is preferably within a range of from 480 to 650°C, more preferably within a range of from 480 to 550°C.
The reaction pressure is preferably within a range of from 0.02 to 5 MPa, more preferably within a range of from 0.2 to 2 MPa.
The reaction temperature and the reaction pressure falling within the above-mentioned range are preferred, since the cracking activity of the desulfurization function-added FCC catalyst is high and the degree of desulfurization of FCC gasoline is high.
The regeneration temperature of the catalyst is generally from 600 to 800°C.
In the present invention 1, 2 or 3, a fraction of which the boiling point range is from C₅ fraction to 230°C or so may be fractionated from the thus-obtained cracked oil, thereby giving the intended low-sulfur FCC gasoline.
Accordingly, the sulfur content of the FCC gasoline may be reduced to at most 50 ppm by mass, more preferably at most 30 ppm by mass, even more preferably at most 15 ppm by mass.
In the present invention 1, FCC gasoline is meant to indicate a fraction of which the boiling point range falls from C₅ fraction to 230°C (fraction having at least 5 carbon atoms and having a boiling point of not higher than 230°C).
The sulfur content of FCC gasoline is measured according to oxidative micro coulometry method.

In the production method for FCC gasoline of the present invention 1 or 2, used is a FCC catalyst in which zeolite is contained and vanadium is supported on a carrier in a process for producing FCC gasoline by cracking heavy oil in FCC unit.
In the desulfurization function-added FCC catalyst of the present invention 1 and 2 used in the method, zeolite is previously coated with alumina so that the micropores of zeolite are filled up to thereby reduce the pore diameter.
Accordingly, vanadium as a desulfurization active point, is prevented from being introduced into the micropores and can be therefore supported on the outer surface of zeolite and on the catalyst matrix such as silica, alumina and clay mineral such as kaolin or the like.
Since vanadium does not penetrate into the micropores, the cracking activity species, zeolite is prevented from being broken and the active point of the cracking function-having zeolite is not poisoned by vanadium, and therefore the solid acid property of zeolite is kept as such and feed oil and the cracked product oil are not prevented from diffusing into the zeolite pores.
Moreover, in a process where the starting feed heavy oil diffuses inside the catalyst and is gradually cracked, the desulfurization with vanadium existing on the outer surface of zeolite and on the carrier matrix may efficiently go on, and the desulfurization activity of vanadium may effectively function.

Further, in a process for supporting vanadium on a carrier of the desulfurization function-added FCC catalyst of the present invention 1 or 2, a supporting solution prepared by mixing at least one selected from inorganic acids, organic acids and other metal salts in a vanadium salt solution or a vanadium-containing solution is infiltrated in and supported on a carrier to thereby form a vanadium polynuclear complex salt, and the complex salt synergistically acts with the alumina-coating effect on zeolite, therefore protecting zeolite from breakage and activating the desulfurization function of vanadium.
Accordingly, the desulfurization capability of the desulfurization function-added FCC catalyst of the present invention 1 or 2 is significantly enhanced and the catalyst can keep its cracking activity, therefore increase the yield of FCC gasoline and LCO can be increased and the coke yield can be decreased.

In a process for supporting vanadium on a carrier of the desulfurization function-added FCC catalyst of the present invention 3, vanadium and manganese and/or phosphorus form a complex ion, and therefore it does not penetrate into the micropores of the carrier zeolite but are supported in the macropores of the carrier.
Accordingly, the desulfurization function of vanadium is efficiently active, and this synergistically functions with the cracking activity of the carrier acid point, therefore further improving the desulfurization capability of the catalyst, and the catalyst can keep its cracking activity.
Accordingly, using the desulfurization function-added FCC catalyst of the present invention 3, the yield of FCC gasoline and LCO can be increased and the coke yield can be reduced.

The sulfur ingredient in the starting feed oil in the FCC unit is released along with the decomposition of the hydrocarbons therein, and is converted into hydrogen sulfide through hydrogenation and desulfurization on the metal such as vanadium , and discharged out and removed from the system through the reactor tower.
On the other hand, the sulfur ingredient may be adsorbed by the metal species such as vanadium or may be caught by the deposited coke, and is fired in a regeneration tower, then oxidized into SOx and discharged out.
Through sulfiding (reduction) in the reactor and through oxidation in the regeneration tower, the morphology of the metal species changes, and it may be presumed that the active metal such as vanadium may be sulfurized (reduced) in the reactor and therefore may exist mainly as a sulfide thereof, and the active metal may be oxidized in the regeneration tower and may be in the form of a sulfate salt with a sulfate radical.
These sulfide and the sulfate may be in the form of a mixture thereof in the reactor and the regeneration tower where they exist together.

### [Examples]

Next, the present inventions 1 to 3 are described in more detail with reference to Examples; however, the present inventions 1 to 3 should not be restricted at all by these Examples.

### Evaluation Method:

### (1) Physical Properties of Catalyst:

### (1-1) Measurement of Acid Amount:

It is measured according to the method described in the description.

### (1-2) Measurement of Surface Area of Macropores:

Using a pore distribution analyzer (Quantachrome's "Autosorp 6"), a pore distribution is determined according to a nitrogen adsorption method, and the t-plot microsurface area is subtracted from the surface area measured at a nitrogen relative pressure (P/P₀) = 0.3 in a BET multi-point method to give the micropore surface area.

### (1-3) XPS Analysis:

The catalysts prepared in Examples and Comparative Examples are analyzed for XPS determination.

As a device, used is Ulvac's "Quantum 2000". For the test condition, monochromatic AlKα ray is used, and the detection angle is 45 degrees.

### (2) Evaluation of Supporting Solution; Permeability through Reverse Osmosis Membrane:

The permeability through an reverse osmosis membrane of the metal ion in the supporting solution obtained in Examples and Comparative Examples is measured, using Nitto Denko Matex Co., Ltd. 's reverse osmosis membrane "NTR-7450HG".

The reverse osmosis membrane used herein has a pore diameter of 7.6 A, as computed according to a molecular orbital method.

### (3) Reaction Evaluation:

### (3-1) Determination of Degree of Desulfurization:

The catalyst obtained in Examples and Comparative Examples is filled in a continuous fluidized bed bench plant. In the present invention 1, desulfurized heavy gas oil (VHHGO) having a sulfur content of 0.17 % by mass; and in the present invention 2 and 3, desulfurized heavy gas oil having the properties shown in Table 2 is cracked and desulfurized under the condition of a reaction temperature of 535°C, a reaction pressure of 0.18 MPa·G, a catalyst regeneration temperature of 683°C, a catalyst/feed oil ratio (by mass) of 7.0, and feed oil feeding ratio of 950 g/hr.

The product oil is processed in a 15-stage distillation device, in which a fraction of from a boiling point C₅ to 230°C is collected as FCC gasoline, and its sulfur content and nitrogen content are determined.

The sulfur is determined according to micro coulometry method, and the nitrogen is determined according to chemical spectrometry.

### (3-2) Sulfur Content of FCC gasoline:

FCC gasoline is introduced into a heated firing tube, and fired therein in a gas flow of oxygen and inert gas.

Sulfur dioxide produced by firing is absorbed by an electrolytic solution for micro coulometry method, and the sulfur content of the sample is obtained from the quantity of electricity consumed.

The sulfur content of the sample is corrected by the collection coefficient previously obtained with a sulfur standard solution.

### (3-3) Determination of Conversion:

In the present invention 1, the same desulfurized heavy gas oil (VHHGO) as that used in the above-mentioned determination of desulfurization rate is reacted, using an ordinary MAT unit (micro activity test unit, ASTM MAT D3907, method for evaluation of petroleum-based hydrocarbon cracking activity of catalyst).

The reaction temperature is 530°C, and the catalyst/feed oil ratio (by mass) is 4.0.

The sample is evaluated based on the gasoline yield (% by mass) (see Table 1).

The gasoline yield in the present invention 2 is for the fraction gasoline of from a boiling point C₅ to 230°C (see Table 3).

In the present invention 3, the yield of the gas, the FCC gasoline and the coke obtained in the reaction in the above-mentioned continuous fluidized bed bench plant are added to determine the cracking degree (see Table 4).

### (3-4) Sulfur Content of FCC gasoline:

FCC gasoline is introduced into a heated firing tube, and fired therein in oxygen and inert gas. Sulfur dioxide produced by firing is absorbed by an electrolytic solution for micro coulometric titration, and the sulfur content of the sample is obtained from the quantity of electricity consumed.
The sulfur content of the sample is corrected by the collection coefficient previously obtained with a sulfur standard solution.

### Example 1:

### (1) Preparation of alumina-coated USY-type zeolite:

Ultra-stable Y-type zeolite (USY) (1650 g, based on SiO₂-Al₂O₃) having an NFA amount of 5.0 % by mass and a lattice constant of 24.57 A, prepared by steaming, was suspended in deionized water (3350 g) with stirring, and heated up to 60°C.

Sulfuric acid having a concentration of 25 % by mass was added to the zeolite suspension slurry, and the slurry was controlled to have a pH of 2.8.

Separately, an aqueous sodium aluminate solution (2850 g) having an Al₂O₃ concentration of 5 % by mass, heated at 60°C, was prepared; and the zeolite suspension slurry having a controlled pH of 2.8 was added to the aqueous sodium aluminate solution, it taking 5 minutes.

After the addition, the pH of the slurry was 7.8.

The mixed slurry was stirred for 1 hour, then processed for solid-liquid separation with a reduced pressure suction filter unit, washed with deionized water at 60°C to thereby remove the remaining side-product salts such as Na ion and SO₄ ion to prepare an alumina-coated USY.

The alumina-coated USY was added to deionized water (4000 g) to be in slurry, thereby giving an alumina-coated USY slurry.

### (2) Production of carrier:

Alumina was suspended in deionized water, and kaolin clay as a shaping aid was added thereto to prepare a slurry (hereinafter referred to as "matrix precursor slurry").
The alumina-coated USY slurry produced in above process (1) and the matrix precursor slurry were mixed, and then the mixed slurry was spray-dried to give spherical microparticles having a mean particle size of 65 µm.
The spherical microparticles were washed with ammonium sulfate solution and deionized water at 60°C, then ion-exchanged with a lanthanum chloride solution to a degree of 2.2 % by mass as lanthanum oxide, washed and dried to give a powdery carrier (A).

### (3) Production of desulfurization function-added FCC catalyst:

An aqueous vanadium oxysulfate solution was prepared by dissolving vanadium oxysulfate (VOSO₄·nH₂O (n = 3 to 4) (8.9 g) in water (190 mL) so that vanadium could be supported on the powdery carrier (A) produced in above process (2), in an amount of 4000 ppm by mass in terms of vanadium.
The amount of water was determined by measuring the water absorption by the powdery carrier (A) at room temperature.
The aqueous vanadium oxysulfate solution had a pH of 2.3 and was transparent ultramarine.
The aqueous solution was infiltrated under normal pressure into the powdery carrier (A) (500 g), and then dried at 120°C for 3 hours thereby giving a desulfurization function-added FCC catalyst (B1-1) having a supported vanadium amount of 4000 ppm by mass.
Next, the desulfurization function-added FCC catalyst (B1-1) was, under a pseudo-equilibrium condition, baked in air at 600°C for 1 hour, and then steamed under the condition of a steam concentration of 98 % by volume and an air concentration of 2 % by volume, at a temperature of 760°C for 6 hours, thereby giving a steamed catalyst (C1-1).
The steamed catalyst (C1-1) (240 g) was uniformly mixed with an equilibrium catalyst (D1) (1360 g) having 870 ppm by mass of vanadium and 530 ppm by mass of nickel both accumulated therein, thereby giving a desulfurization function-added FCC catalyst (E1-1) of the present invention 1.
The desulfurization function-added FCC catalyst (E1-1) was evaluated, using the above-mentioned continuous fluidized bed bench plant.
The evaluation result is shown in Table 1.
In the test using MAT unit, the steamed catalyst (C1-1) (0.75 g) and the equilibrium catalyst (D1) (4.25 g) were mixed to give a desulfurization function-added FCC catalyst (F1-1) of the present invention 1, and it was used for the reaction.
The evaluation result is shown in Table 1.

### Example 2:

In Example 1 (3), the amount of water to be added was changed to 185 mL, concentrated sulfuric acid (concentration 95 %) was added so as to control the pH of the solution to about 1.5, and thereafter deionized water was added to prepare an aqueous vanadium oxysulfate solution (190 mL) corresponding to the water absorption content of the powdery carrier (A) at room temperature.
Like in Example 1, the aqueous solution was infiltrated under normal pressure into the powdery carrier (A) (500 g), and dried at 120°C for 3 hours, thereby giving a desulfurization function-added FCC catalyst (B1-2).
The vanadium content of the desulfurization function-added FCC catalyst (B1-2) was 4000 ppm by mass in terms of vanadium metal.
The vanadium solution had a pH of 1.5 and was transparent ultramarine.
The desulfurization function-added FCC catalyst (B1-2) was subjected to the same pseudo-equilibrium treatment as in Example 1, thereby giving a steamed catalyst (C1-2).
The steamed catalyst (C1-2) (240 g) was uniformly mixed with the same equilibrium catalyst (D1) (1360 g) as in Example 1, thereby giving a desulfurization function-added FCC catalyst (E1-2) of the present invention 1.
The desulfurization function-added FCC catalyst (E1-2) was evaluated, using the same continuous fluidized bed bench plant as in Example 1.
The evaluation result is shown in Table 1.
In the test using MAT unit, the steamed catalyst (C1-2) (0.75g) and the equilibrium catalyst (D1) (4.25 g) were mixed to give a desulfurization function-added FCC catalyst (F1-2) of the present invention 1, like in Example 1, and it was used for the reaction.
The evaluation result is shown in Table 1.

### Example 3:

Ammonium metavanadate NH₃VO₃ (4.6 g) was prepared, and dissolved in an aqueous solution prepared by dissolving orthophosphoric acid (3.2 g) in deionized water (100 mL), stirred and mixed, then finally deionized water was added thereto to prepare an aqueous ammonium metavanadate-phosphorus solution (190 mL) corresponding to the water absorption content of the powdery carrier (A) at room temperature.
The aqueous solution was infiltrated under normal pressure into the powdery carrier (A) (500 g) like in Example 1.
The pH of the metal-supporting solution was 3.2.
A desulfurization function-added FCC catalyst (B1-3) having 4000 ppm by mass (in terms of metal) of vanadium and 2000 ppm by mass (in terms of phosphorus atom) of phosphorus supported therein was obtained.
The catalyst was subjected to the same pseudo-equilibrium treatment as in Example 1, thereby giving a steamed catalyst (C1-3). The steamed catalyst (C1-3) (240 g) was uniformly mixed with the same equilibrium catalyst (D1) (1360 g) as in Example 1, thereby giving a desulfurization function-added FCC catalyst (E1-3) of the present invention 1.
The desulfurization function-added FCC catalyst (E1-3) was evaluated, using the same continuous fluidized bed bench plant as in Example 1.
The evaluation result is shown in Table 1.
In the test using MAT unit, the steamed catalyst (C1-3) (0.75 g) and the equilibrium catalyst (D1) (4.25 g) were mixed to give a desulfurization function-added FCC catalyst (F1-3) of the present invention 1, like in Example 1, and it was used for the reaction.
The evaluation result is shown in Table 1.

### Example 4:

Vanadium oxysulfate VOSO₄·nH₂O (n = 3 to 4) (8.9 g) was prepared so that 4000 ppm by mass of vanadium could be supported, and dissolved in water (100 mL); and then manganese sulfate MnSO₄·5H₂O (8.8 g) was prepared so that 4000 ppm by mass of manganese could be supported, and dissolved; and deionized water was added to prepare an aqueous vanadium sulfate-manganese sulfate solution (190 mL) corresponding to the water absorption content of the powdery carrier (A) at room temperature.
Its pH was 3.2. The aqueous solution was infiltrated under normal pressure into the powdery carrier (A) (500 g) like in Example 1, and dried at 120°C for 3 hours to give a desulfurization function-added FCC catalyst (B1-4).
The catalyst was subjected to the same pseudo-equilibrium treatment as in Example 1, thereby giving a steamed catalyst (C1-4).
The steamed catalyst (C1-4) (240 g) was uniformly mixed with the same equilibrium catalyst (D1) (1360 g) as in Example 1, thereby giving a desulfurization function-added FCC catalyst (E1-4) of the present invention 1.
The desulfurization function-added FCC catalyst (E1-4) was evaluated, using the same continuous fluidized bed bench plant as in Example 1.
The evaluation result is shown in Table 1.
In the test using MAT unit, the steamed catalyst (C1-4) (0.75 g) and the equilibrium catalyst (D1) (4.25 g) were mixed to give a desulfurization function-added FCC catalyst (F1-4) of the present invention 1, and it was used for the reaction.
The evaluation result is shown in Table 1.

### Example 5:

The steamed catalyst (C1-4) prepared in Example 4 was evaluated, using the same continuous fluidized bench plant as in Example 1.
In the test using MAT unit, the steamed catalyst (C1-4) (5 g) was used for the reaction.
The evaluation result is shown in Table 1.

### Comparative Example 1:

A powdery carrier (A') was prepared in the same manner as in Example 1, for which, however, a USY-type zeolite not coated with alumina was used.
An aqueous vanadium oxysulfate solution corresponding to the water absorption content of the powdery carrier (A') at room temperature was infiltrated and supported on the carrier so that the supported vanadium amount could be 4000 ppm by mass in terms of vanadium metal, thereby giving a desulfurization function-added FCC catalyst (B'1-1).
The catalyst was subjected to the same pseudo-equilibrium treatment as in Example 1, thereby giving a steamed catalyst (C'1-1).
The steamed catalyst (C'1-1) (240 g) was uniformly mixed with the same equilibrium catalyst (D1) (1360 g) as in Example 1, thereby giving a desulfurization function-added FCC catalyst (E'1-1).
The desulfurization function-added FCC catalyst (E'1-1) was evaluated, using the same continuous fluidized bed bench plant as in Example 1.
The evaluation result is shown in Table 1.
In the test using MAT unit, the steamed catalyst (C'1-1) (0.75 g) and the equilibrium catalyst (D1) (4.25 g) were mixed to give a desulfurization function-added FCC catalyst (F'1-1), and it was used for the reaction.
The evaluation result is shown in Table 1.

### Comparative Example 2:

A desulfurization function-added FCC catalyst (B'1-2) was prepared in the same manner as in Example 3, for which, however, a USY-type zeolite not coated with alumina was used.
The desulfurization function-added FCC catalyst (B'1-2) was subjected to the same pseudo-equilibrium treatment as in Example 1, thereby giving a steamed catalyst (C'1-2).
The steamed catalyst (C'1-2) (240 g) was uniformly mixed with the same equilibrium catalyst (D1) (1360 g) as in Example 1, thereby giving a FCC catalyst (E'-2).
The desulfurization function-added FCC catalyst (E'1-2) was evaluated, using the same continuous fluidized bed bench plant as in Example 1.
The evaluation result is shown in Table 1.
In the test using MAT unit, the steamed catalyst (C'1-2) (0.75 g) and the equilibrium catalyst (D1) (4.25 g) were mixed to give a desulfurization function-added FCC catalyst (F'1-2), and it was used for the reaction.
The evaluation result is shown in Table 1.

### Comparative Example 3:

The equilibrium catalyst (D) used in Example 1 was subjected to the same pseudo-equilibrium treatment as in Example 1. Thus obtained catalyst as a desulfurization function-added FCC catalystwas evaluated according to the same test method as in Example 1.
The evaluation result is shown in Table 1.

[Table 1]

**Table 1**

| | | | | | Example | | | | | Comparative Example | | |
|---|---|---|---|---|---|---|---|---|---|---|---|---|
| | | | | | 1 | 2 | 3 | 4 | 5 | 1 | 2 | 3 |
| Desulfurization Function-Added FCC Catalyst (B1) | type | | | | B1-1 | B1-2 | B1-3 | B1-4 | B1-4 | B'1-1 | B'1-2 | - |
| | content (mas.%) | | | | 15 | 15 | 15 | 15 | 100 | 15 | 15 | - |
| | composition | ingredient (a) (mas.%) | | alumina | 8.9 | 8.9 | 8.9 | 8.9 | 8.9 | 6.5 | 6.5 | - |
| | | | | zeolite | 29.5 | 29.5 | 29.5 | 29.5 | 29.5 | 30.4 | 30.4 | - |
| | | ingredient (b) (mas.%) | | SiO₂ kaolin La₂O₃ | 18.9 | 18.9 | 18.8 | 18.7 | 18.7 | 19.4 | 19.4 | - |
| | | | | | 39.5 | 39.5 | 39.4 | 39.3 | 39.3 | 40.8 | 40.7 | - |
| | | | | | 2.2 | 2.2 | 2.2 | 2.2 | 2.2 | 2.2 | 2.2 | - |
| | | metal species (mas.ppm) | | vanadium | 4000 | 4000 | 4000 | 4000 | 4000 | 4000 | 4000 | - |
| | | | | manganese | - | - | - | 4000 | 4000 | - | - | - |
| | | | | phosphorus | - | - | 2000 | - | - | - | 2000 | - |
| | physical properties | acid amount (µmol/g) | | | 345 | 348 | 352 | 346 | 352 | 330 | 347 | - |
| | | surface area of macropores (m²/g) | | | 57 | 55 | 56 | 54 | 56 | 59 | 58 | - |
| Equilibrium Catalyst (D1) | content (mas.%) | | | | 85 | 85 | 85 | 85 | - | 85 | 85 | 100 |
| | composition | metal species (mas.ppm) | | vanadium | 870 | 870 | 870 | 870 | - | 870 | 870 | 870 |
| | | | | nickel | 530 | 530 | 530 | 530 | - | 530 | 530 | 530 |
| Evaluation Result | bench plant | | sulfur content of FCC gasoline (mas.ppm) | | 13 | 12 | 15 | 10 | 6 | 16 | 18 | 20 |
| | | | nitrogen content of FCC gasoline (mas.ppm) | | 100> | 100> | 100> | 100> | 100> | 100> | 100> | 100> |
| | MAT | | gasoline yield (mas.%) | | 45.3 | 44.8 | 44.0 | 46.2 | 49.6 | 43.3 | 43.2 | 42.0 |
| | | | LCO yield (mas.%) | | 22.8 | 22.6 | 23.7 | 22.4 | 16.8 | 23.7 | 23.4 | 23.8 |
| | | | coke yield (mas.%) | | 2.4 | 2.6 | 2.5 | 2.3 | 3.5 | 2.5 | 2.6 | 2.2 |
| | | | conversion of feed oil (mas.%) | | 70.5 | 70.0 | 70.2 | 70.9 | 80.4 | 68.5 | 68.2 | 66.8 |

### Example 6:

### (1) Preparation of alumina-coated USY-type zeolite:

Ultra-stable Y-type zeolite (USY) (165 g, based on SiO₂-Al₂O₃) having an NFA amount of 5.0 % by mass and a lattice constant of 24.57 A, prepared by steaming, was suspended in deionized water (335 g) with stirring, and heated up to 60°C.
Sulfuric acid having a concentration of 25 % by mass was added to the zeolite suspension slurry, and the slurry was controlled to have a pH of 2.8.
Separately, an aqueous sodium aluminate solution (285 g) having an Al₂O₃ concentration of 5 % by mass, heated at 60°C, was prepared; and the zeolite suspension slurry having a controlled pH of 2.8 was added to the aqueous sodium aluminate solution, it taking 5 minutes.
After the addition, the pH of the slurry was 7.8.
The mixed slurry was stirred for 1 hour, then processed for solid-liquid separation with a vacuum suction filter unit, washed with deionized water at 60°C to thereby remove the remaining side-product salts such as Na ion and SO₄ ion to prepare an alumina-coated USY.
The alumina coating amount was 8.0 % by mass as dry base.

### (2) Production of carrier:

As dry base, the alumina-coated USY (20 % by mass) prepared in (1), alumina (20 % by mass), silica (20 % by mass) and kaolin (ratio of alumina/silica by mass, 50/50) (40 % by mass) were stirred and mixed in ion-exchanged water to prepare a slurry.
According to a spray drying method at 120°C, the mixed slurry was dried to give spherical microparticles having a mean particle size of 70 µm. According to an ion-exchange method, lanthanum (rare earth element) was applied to and supported on the spherical microparticles in an amount of 1.7 % by mass, and dried at 120°C for 3 hours.
The alumina content of the catalyst carrier was 44 % by mass.

### (3) Production of desulfurization function-added FCC catalyst:

An aqueous vanadyl sulfate solution was prepared by dissolving vanadyl sulfate (VOSO₄·nH₂O (n = 3 to 4) in ion-exchanged water (105 mL) so that vanadium could be supported on the carrier (A-1) produced in (2), in an amount of 4000 ppm by mass in terms of vanadium.
The amount of water was determined by measuring the water absorption of the carrier (A-1) at room temperature.
The aqueous vanadyl sulfate solution had a pH of 2.3 and was transparent ultramarine.
The aqueous solution was infiltrated under normal pressure into the carrier (A-1) (300 g), and then dried at 120°C for 3 hours thereby giving a desulfurization function-added FCC catalyst (B2-1) having a supported vanadium amount of 4000 ppm by mass.
The desulfurization function-added FCC catalyst (B2-1) was evaluated according to the above-mentioned XPS analysis.
The result is shown in Table 3.

### (4) Production of mixed FCC catalyst:

Next, the desulfurization function-added FCC catalyst (B2-1) was, as under a pseudo-equilibrium condition, steamed under the condition of a steam concentration of 98 % by volume and an air concentration of 2 % by volume, at a temperature of 760°C for 6 hours, thereby giving a steamed catalyst (C2-1) .
The steamed catalyst (C2-1) (210 g) was uniformly mixed with an equilibrium catalyst (D2) (1190 g) having 530 ppm by mass of vanadium and 290 ppm by mass of nickel both accumulated therein, thereby giving desulfurization function-added FCC catalyst (E2-1) of the present invention 2.
The desulfurization function-added FCC catalyst (E2-1) was evaluated, using the above-mentioned continuous fluidized bed bench plant.
The evaluation result is shown in Table 3.

### Example 7:

A supporting solution was prepared by dissolving vanadium sulfate VOSO₄·nH₂O (n = 3 to 4) in such an amount that 4000 ppm by mass of vanadium could be supported on a carrier, and manganese sulfate MnSO₄·5H₂O in such an amount that 4000 ppm by mass of manganese could be supported on the carrier, in ion-exchanged water (105 mL).
The desulfurization function-added FCC catalyst (B2-2) was produced in the same manner as in Example 6, for which, however, the above-mentioned supporting solution was used in place of the supporting solution in Example 6.
The desulfurization function-added FCC catalyst (B2-2) was evaluated by XPS analysis like in Example 6.
The result is shown in Table 3.
Also like in Example 6, the catalyst was steamed and mixed with the equilibrium catalyst (D2) to give desulfurization function-added FCC catalyst (E2-2).
It was evaluated like in Example 6, and the result is shown in Table 3.

### Comparative Example 4:

An aqueous 3.0 mas.% solution (2.0 L) of vanadium sulfate VOSO₄·nH₂O (n = 3 to 4) was prepared so that the dry-base vanadium content could be 4000 ppm by mass.
The same carrier (300 g) as produced in Example 6 was put into the aqueous solution, and stirred at 80°C for 1 hour for ion-exchange treatment.
After the ion-exchange treatment, the catalyst was collected by filtration, and washed three times with ion-exchanged water (600 mL).
Next, it was dried at 120°C to give desulfurization function-added FCC catalyst (B'2-1).
Like in Example 6, the desulfurization function-added FCC catalyst(B'2-1) was evaluated by XPS analysis.
The result is shown in Table 3.
Next, like in Example 6, the catalyst was steamed and mixed with the equilibrium catalyst (D2) to give desulfurization function-added FCC catalyst (E'2-1), and it was evaluated in the same manner as in Example 6.
The result is shown in Table 3.

### Comparative Example 5:

Ammonium metavanadate and oxalic acid (2000 ppm by mass) were dissolved in ion-exchanged water (105 mL) to prepare a supporting solution so that the dry-base vanadium could be supported in a carrier in an amount of 4000 ppm by mass.
The desulfurization function-added FCC catalyst (B'2-2) was produced in the same manner as in Example 6, for which, however, the above-mentioned supporting solution was used in place of the supporting solution in Example 6.
Like in Example 6, the desulfurization function-added FCC catalyst(B'2-2) was evaluated by XPS analysis.
The result is shown in Table 3.
Next, like in Example 6, the catalyst was steamed and mixed with the equilibrium catalyst (D2) to give desulfurization function-added FCC catalyst (E'2-2).
The catalyst was evaluated in the same manner as in Example 6, and the result is shown in Table 3.

### Comparative Example 6:

A carrier (A'-3) was prepared in the same manner as in Example 6, for which, however, a USY-type zeolite not coated with alumina was used.
The alumina content of the carrier (A'-3) was 42 % by mass.
Like in Example 6, vanadium was supported on the carrier, thereby producing the desulfurization function-added FCC catalyst (B'2-3).
Also like in Example 6, the desulfurization function-added FCC catalyst(B'2-3) was evaluated by XPS analysis.
The result is shown in Table 3.
Next, like in Example 6, the catalyst was steamed and mixed with the equilibrium catalyst (D2) to give the desulfurization function-added FCC catalyst (E'2-3).
The catalyst was evaluated in the same manner as in Example 6, and the result is shown in Table 3.

### Comparative Example 7:

As dry base, the alumina-coated USY (20 % by mass) prepared in Example 6 (1), alumina (5 % by mass), silica (35 % by mass) and kaolin (ratio of alumina/silica by mass, 50/50) (40 % by mass) were stirred and mixed in ion-exchanged water to prepare a slurry.
According to a spray drying at 120°C, the mixed slurry was dried to give spherical microparticles having a mean particle size of 69 µm.
According to an ion-exchange method, lanthanum (rare earth element) was applied to and supported on the spherical microparticles in an amount of 1.7 % by mass, and baked at 550°C for 3 hours to give a catalyst carrier (A'-4).
The alumina content of the catalyst carrier was 27 % by mass.
An aqueous vanadyl sulfate solution was prepared by dissolving vanadyl sulfate (VOSO₄·nH₂O (n = 3 to 4)) in ion-exchanged water (96 mL) so that vanadium could be supported on the carrier (A'-4) in an amount of 4000 ppm by mass in terms of vanadium.
The amount of water was determined by measuring the water absorption of the carrier (A'-4) at room temperature.
The aqueous vanadyl sulfate solution had a pH of 2.3 and
was transparent ultramarine.
The aqueous solutionwas infiltrated under normal pressure into the carrier (A'-4) (300 g), and then dried at 120°C for 3 hours thereby giving the desulfurization function-added FCC catalyst (B'2-4) having a supported vanadium amount of 4000 ppm by mass.
The desulfurization function-added FCC catalyst (B'2-4) was evaluated according to the above-mentioned XPS analysis.
The result is shown in Table 3.
Like in Example 6, the catalyst was steamed and mixed with the equilibrium catalyst (D2) to give the desulfurization function-added FCC catalyst (E'2-4).
Like in Example 6, the catalyst was evaluated and the result is shown in Table 3.

[Table 2]

**Table 2**

| | |
|---|---|
| Density (g/mL) | 0.8821 |
| Sulfur Content (mas.%) | 0.21 |
| Residual Carbon (mas.%) | 0.04 |
| Total Nitrogen (mas.ppm) | 310 |
| Kinematic Viscosity (mm²/s) | 14.99 |

[Table 3]

**Table 3**

| | | Example | | Comparative Example | | | |
|---|---|---|---|---|---|---|---|
| | | 6 | 7 | 4 | 5 | 6 | 7 |
| | alumina (mas.%) | 20 | 20 | 20 | 20 | 20 | 5 |
| | silica (mas.%) | 20 | 20 | 20 | 20 | 20 | 35 |
| (A) | zeolite (mas.%) | 20 | 20 | 20 | 20 | 20 | 20 |
| Desulfurization | kaolin (mas.%) | 40 | 40 | 40 | 40 | 40 | 40 |
| Function-Added | vanadium (mas.ppm) | 4000 | 4000 | 4000 | 4000 | 4000 | 4000 |
| FCC Catalyst | manganese (mas.ppm) | - | 4000 | - | - | - | - |
| | alumina content^{*1} (mas.%) | 44 | 44 | 42 | 42 | 42 | 27 |
| (B) Equilibrium | vanadium (mas.ppm) | 530 | 530 | 530 | 530 | 530 | 530 |
| Catalyst (D2) | nickel (mas.ppm) | 290 | 290 | 290 | 290 | 290 | 290 |
| Content of Ingredient (A) in Mixed Catalyst | | 15 | 15 | 15 | 15 | 15 | 15 |
| Evaluation Result | vanadium ratio by XPS (before round/after ground) | 7.0 | 2.5 | 1.7 | 1.3 | 6.0 | 1.4 |
| | acid amount (µ/g) | 260 | 260 | 190 | 180 | 160 | 170 |
| | surface area of macropores (m²/g) | 90 | 90 | 80 | 80 | 70 | 40 |
| | sulfur content (mas.ppm) | 15 | 13 | 25 | 27 | 26 | 28 |
| | gasoline yield (mas.%) | 41 | 44 | 38 | 38 | 39 | 36 |

| | | | | | | | |
|---|---|---|---|---|---|---|---|
| *1: Including alumina from kaolin and alumina-coated zeolite. | | | | | | | |

### Example 8:

### (1) Preparation of carrier:

Based on mass after calcination, ultra-stable Y-type zeolite (USY, Toso Co. , Ltd. 's "FSZ-330HUA") (20 % by mass), alumina (La Roche Chemicals Co., Ltd.'s "VERSAL250") (10 % by mass), silica (Nippon Chemical Industry Co., Ltd.'s "Water Glass JIS No. 3") (30 % by mass) and kaolin (Tsuchiya Kaolin Industry Co., Ltd.'s "ASP-170") (40 % by mass) were stirred and mixed in ion-exchanged water to give a slurry.
The slurry was spray-dried at 120°C, and then sunk in an aqueous solution containing lanthanum (5 % by mass, based on oxide) for ion-exchange with lanthanum (2 % by mass based on oxide after calcination).
Next, the spray-dried product was dried at 120°C for 3 hours and then baked at 550°C for 3 hours to give a spherical catalyst carrier.

### (2) Preparation of supporting solution:

Vanadyl sulfate (VOSO₄) and manganese sulfate (MnSO₄) were dissolved in ion-exchanged water (111 mL) each in an amount of 4000 ppm by mass in terms of vanadium metal and manganese metal based on mass after calcination, thereby preparing a supporting solution.
The permeability through a reverse osmosis membrane of the supporting solution was measured according to the above-mentioned method.
The result is shown in Table 4.
The water content of the catalyst carrier produced in the above (1) was 0.37 mL/g, and the amount of water in the supporting solution was made to correspond to the water absorption content of the catalyst carrier.

### (3) Production of mixed catalyst:

The supporting solution prepared in the above (2) was infiltrated and supported on the catalyst carrier (300 g) produced in the above (1), and then dried at 120°C for 3 hours to prepare desulfurization function-added FCC catalyst.
The desulfurization function-added FCC catalyst was, as under a pseudo-equilibrium condition, steamed under the condition of a steam concentration of 98 % by volume and an air concentration of 2 % by volume, at a temperature of 760°C for 6 hours, thereby giving a steamed catalyst.
The steamed catalyst (15 % by mass) was uniformly mixed with an equilibrium catalyst (D2) (85 % by mass) having 530 ppm by mass of vanadium and 290 ppm by mass of nickel both accumulated therein, thereby giving a mixed catalyst.
The physical properties and the reactivity of the catalyst were evaluated according to the above-mentioned methods.
The result is shown in Table 4.

### Example 9:

A catalyst was prepared in the same manner as in Example 8, for which, however, ammonium metavanadate (NH₃VO₃) was used in place of vanadyl sulfate and orthophosphoric acid was added so that the phosphorus atom could be 2000 ppm by mass in place of manganese sulfate, and thus obtained catalyst was evaluated in the same manner as in Example 8.
The result is shown in Table 4.

### Comparative Example 8:

### (1) Preparation of catalyst:

Based on mass after calcination, ultra-stable Y-type zeolite (USY, Toso Co., Ltd.'s "FSZ-330HUA") (25 % by mass), alumina (La Roche Chemicals Co., Ltd. 's "VERSAL250") (20 % by mass), silica (Nippon Chemical Industry Co., Ltd.'s "Water Glass JIS No. 3") (15 % by mass) and kaolin (Tsuchiya Kaolin Industry Co., Ltd. 's "ASP-170") (40 % by mass) were stirred and mixed in ion-exchanged water to give a slurry.
The slurry was spray-dried at 120°C, and then sunk in an aqueous solution containing lanthanum (5 % by mass, based on oxide) for ion-exchange with lanthanum (2 % by mass based on oxide after calcination).
Next, the spray-dried product was dried at 120°C for 3 hours and then baked at 550°C for 3 hours to give a spherical catalyst carrier.

### (2) Preparation of supporting solution:

Vanadyl sulfate was dissolved in ion-exchanged water (144 mL) to prepare a supporting solution so that a carrier could support an amount of 4000 ppm by mass in terms of vanadium metal based on mass after calcination.
The permeability through a reverse osmosis membrane of the supporting solution was measured by the above-mentioned method.
The result is shown in Table 4.
The water content of the catalyst carrier produced in the above (1) was 0.48 mL/g, and the amount of water in the supporting solution was made to correspond to the water absorption of the catalyst carrier.

### (3) Production of mixed catalyst:

Using the catalyst carrier (300 g) produced in the above (1) and the supporting solution prepared in the above (2), a mixed catalyst was produced like in Example 8.
The physical properties and the reactivity of the catalyst were evaluated according to the above-mentioned methods.
The result is shown in Table 4.

### Comparative Example 9:

Not using the desulfurization function-added FCC catalyst, the equilibrium catalyst (D2) alone containing vanadium (530 ppm by mass) and nickel (290 ppm by mass) accumulated therein was evaluated in the same manner as in Example 8.
The result is shown in Table 4.

[Table 4]

**Table 4**

| | | Example | | Comparative Example | |
|---|---|---|---|---|---|
| | | 8 | 9 | 8 | 9 |
| (A) Desulfurization Function-Added FCC Catalyst | alumina (mas.%) | 10 | 10 | 20 | - |
| | silica (mas.%) | 30 | 30 | 15 | - |
| | zeolite (mas.%) | 20 | 20 | 25 | - |
| | kaolin (mas.%) | 40 | 40 | 40 | - |
| | vanadium (mas.ppm) | 4000 | 4000 | 4000 | - |
| | manganese (mas.ppm) | 4000 | - | - | - |
| | phosphorus (mas.ppm) | - | 2000 | - | - |
| (B) Equilibrium | vanadium (mas.ppm) | 530 | 530 | 530 | 530 |
| Catalyst (D2) | nickel (mas.ppm) | 290 | 290 | 290 | 290 |
| Content of Ingredient (A) in Mixed Catalyst | | 15 | 15 | 15 | 0 |
| Evaluation Result | permeability (%) through reverse osmosis membrane ^{*1} | 9 | 23 | 100 | - |
| | acid amount (µ/g) | 260 | 260 | 280 | - |
| | surface area of macropores (m²/g) | 60 | 60 | 65 | - |
| | sulfur content (mas.ppm) | 14 | 16 | 25 | 29 |
| | gasoline yield (mas.%) | 44 | 42 | 40 | 40 |

| | | | | | |
|---|---|---|---|---|---|
| *1: Ratio to the permeability through a reverse osmosis membrane of vanadyl sulfate. | | | | | |

### [Industrial Applicability]

According to the present invention 1, 2 or 3, cracking and desulfurization can be attained simultaneously in FCC unit to produce low-sulfur cracked gasoline; and concretely, low-sulfur cracked gasoline having a sulfur content of at most 50 ppm by mass or at most 30 ppm by mass or further at most 15 ppm by mass can be produced industrially advantageously at high yield.
Accordingly, in the hydrogenation purification device in the former stage and the latter stage of FCC unit, the reaction temperature may be lowered, and the hydrogen consumption and the operation load may be reduced.
This brings about operation cost reduction and further reduction in carbon dioxide discharge, therefore contributing toward reduction in the environmental load.
According to the present invention 1, 2 or 3, high-sulfur feed oil can be introduced into FCC unit, and feed oil cost can be reduced.

## Claims

1. The desulfurization function-added FCC catalyst having vanadium supported on a carrier comprising (a) an alumina-coated zeolite and (b) a porous inorganic oxide except zeolite and/or a clay mineral, wherein the supported vanadium amount is from 500 to 20000 ppm by mass in terms of vanadium metal and the acid amount is from 20 to 450 µmol/g and the macropore surface area is from 30 to 150 m²/g.

2. The desulfurization function-added FCC catalyst as claimed in claim 1, wherein the zeolite is at least one selected from Y-type zeolite, rare earth exchanged Y-type zeolite, USY-type zeolite, rare earth exchanged USY-type zeolite, β-type zeolite, ZSM-5 and L-type zeolite.

3. The desulfurization function-added FCC catalyst as claimed in claim 2, wherein the zeolite is at least one selected from Y-type zeolite, rare earth exchanged Y-type zeolite, USY-type zeolite and rare earth exchanged USY-type zeolite.

4. The desulfurization function-added FCC catalyst as claimed in claim 1, wherein the vanadium to be supported is vanadium alone or vanadium and any other different metal, at least a part of which forms a polynuclear complex salt.

5. The desulfurization function-added FCC catalyst as claimed in claim 4, wherein the polynuclear complex salt is a di- to tetra-nuclear complex salt of vanadium alone or vanadium and any other different metal.

6. The desulfurization function-added FCC catalyst as claimed in claim 4, wherein the polynuclear complex salt is an isopolyacid salt or a heteropolyacid salt.

7. The desulfurization function-added FCC catalyst as claimed in claim 1, wherein vanadium is supported by the use of a supporting solution prepared by mixing a vanadium-containing solution and at least one selected from inorganic acids, organic acids and other metal salts.

8. The desulfurization function-added FCC catalyst as claimed in claim 7, wherein the inorganic acid is at least one selected from sulfuric acid, hydrochloric acid, phosphoric acid, nitric acid, perchloric acid, boric acid and pyrophosphoric acid; the organic acid is at least one selected from oxalic acid, acetic acid, citric acid, glutamic acid, gluconic acid, stearic acid, formic acid, tartaric acid, benzoic acid, succinic acid, salicylic acid, aspartic acid, ascorbic acid, acetylsalicylic acid and amino acid; the other metal salt is one inorganic metal salt or organic metal salt ; and the other metal is at least one selected from manganese, magnesium, calcium, cobalt, zinc, copper, titanium, aluminium, nickel, iron, chromium, lanthanum, yttrium, scandium, niobium, tantalum, molybdenum and tungsten.

9. The desulfurization function-added FCC catalyst as claimed in claim 7, wherein vanadium forms a polynuclear complex salt in the supporting solution.

10. The desulfurization function-added FCC catalyst as claimed in claim 8, wherein the polynuclear complex salt is an isopolyacid salt or a heteropolyacid salt.

11. The desulfurization function-added FCC catalyst as claimed in claim 1, wherein vanadium is supported on at least any of the outer surface of zeolite, or the porous inorganic oxide except zeolite and the clay mineral.

12. The desulfurization function-added FCC catalyst as claimed in claim 1, wherein the porous inorganic oxide is at least one selected from alumina, silica, silica-alumina, titania, alumina-titania, and silica-titania, and the clay mineral is at least one selected from kaolin, halloysite and bentonite.

13. The desulfurization function-added FCC catalyst as claimed in claim 1, which further contains a FCC equilibrium catalyst having a vanadium and nickel accumulated amount of from 50 to 20000 ppm by mass, as mixed in an amount of from 0 to 98 % by mass based on the total amount of the catalyst.

14. A method for producing a desulfurization function-added FCC catalyst having vanadium supported on a carrier comprising (a) an alumina-coated zeolite and (b) a porous inorganic oxide except zeolite and/or a clay mineral, which comprises mixing a vanadium salt and an inorganic acid or an organic acid to prepare a water-soluble polyacid salt, and then supporting it on the carrier.

15. A method for producing a desulfurization function-added FCC catalyst having vanadium supported on a carrier comprising (a) an alumina-coated zeolite and (b) a porous inorganic oxide except zeolite and/or a clay mineral, which comprises preparing an aqueous solution of a mixture of a vanadium salt and a salt of any other metal, and supporting the aqueous solution on the carrier.

16. The method for producing a desulfurization function-added FCC catalyst as claimed in claim 15, wherein the other metal which constitutes inorganic metal salt or organic metal salt is at least one selected from manganese, magnesium, calcium, cobalt, zinc, copper, titanium, aluminium, nickel, iron, chromium, lanthanum, yttrium, scandium, niobium, tantalum, molybdenum, and tungsten.

17. A method for producing low-sulfur FCC gasoline, comprising catalytically cracking heavy oil by the use of the desulfurization function-added FCC catalyst of claim 1.

18. A method for producing low-sulfur FCC gasoline, comprising catalytically cracking heavy oil by the use of the desulfurization function-added FCC catalyst produced according to the method of claim 14.

19. The method for producing low-sulfur FCC gasoline as claimed in claim 17, wherein the heavy oil is desulfurized heavy oil and/or desulfurized heavy gas oil, the sulfur content of the heavy oil is from 0.03 to 0.7 % by mass, and the sulfur content of the obtained low-sulfur FCC gasoline within a range of the boiling point range C₅ to 230°C is at most 50 ppm by mass.

20. The method for producing low-sulfur FCC gasoline as claimed in claim 19, wherein the sulfur content of the obtained low-sulfur FCC gasoline within a range of the boiling point range C₅ to 230°C is at most 30 ppm by mass.

21. The method for producing low-sulfur FCC gasoline as claimed in claim 20, wherein the sulfur content of the obtained low-sulfur FCC gasoline within a range of the boiling point range C₅ to 230°C is at most 15 ppm by mass.

22. A desulfurization function-added FCC catalyst having vanadium supported on a carrier containing from 5 to 40 % by mass of (a) an alumina-coated zeolite and from 30 to 70 % by mass of (b) an alumina, wherein the vanadium concentration ratio (before ground/after ground), as measured according to X-ray photo-electronic spectrometry before and after grinding the catalyst, is at least 2.

23. The desulfurization function-added FCC catalyst as claimed in claim 22, wherein the alumina amount of (a) an alumina-coated zeolite is from 3 to 15 % by mass.

24. The desulfurization function-added FCC catalyst as claimed in claim 22, wherein the supported vanadium amount is from 500 to 20000 ppm by mass in terms of vanadium metal.

25. The desulfurization function-added FCC catalyst as claimed in claim 22, wherein the zeolite is at least one selected from Y-type zeolite, rare earth exchanged Y-type zeolite, USY-type zeolite, rare earth exchanged USY-type zeolite, β-type zeolite, ZSM-5, and L-type zeolite.

26. The desulfurization function-added FCC catalyst as claimed in claim 22, which further carries manganese and/or phosphorus as supported, and in which the supported manganese amount is from 500 to 20000 ppm by mass in terms of manganese metal and the supported phosphorus amount is from 100 to 7000 ppm by mass in terms of phosphorus atom.

27. The desulfurization function-added FCC catalyst as claimed in claim 26, wherein vanadium, manganese and phosphorus are supported inside the macropores of the carrier.

28. The desulfurization function-added FCC catalyst as claimed in claim 26, wherein a supporting solution contains an aqueous solution of vanadium sulfate and manganese sulfate and/or phosphoric acid in making vanadium and manganese and/or phosphorus supported on a carrier, and the supporting solution has a pH of from 2 to 4.

29. The desulfurization function-added FCC catalyst as claimed in claim 22, wherein the zeolite is ion-exchanged with a rare earth element, and in the process of preparing the catalyst, it is not baked at a temperature higher than 300°C but is only dried.

30. A FCC catalyst produced by adding (B) a FCC equilibrium catalyst having a vanadium and nickel accumulated amount of from 50 to 20000 ppm by mass to (A) the desulfurization function-added FCC catalyst of claim 22, in an amount of from 0 to 98 % by mass based on the total amount of the catalyst.

31. A method for producing a desulfurization function-added FCC catalyst by supporting a supporting solution containing an aqueous solution of vanadium sulfate, manganese phosphate and/or phosphoric acid on a carrier containing from 5 to 40 % by mass of (a) an alumina-coated zeolite and from 30 to 70 % by mass of (b) an alumina, wherein the supported vanadium amount is from 500 to 20000 ppm by mass in terms of vanadium metal and the supporting solution is controlled to have a pH of from 2 to 4.

32. The method for producing a desulfurization function-added FCC catalyst as claimed in claim 31, wherein the supported manganese amount is from 500 to 20000 ppm by mass in terms of manganese metal and the supported phosphorus amount is from 100 to 7000 ppm by mass in terms of phosphorus atom.

33. The method for producing a desulfurization function-added FCC catalyst as claimed in claim 31, wherein the zeolite is at least one selected from Y-type zeolite, rare earth exchanged Y-type zeolite, USY-type zeolite, rare earth exchanged USY-type zeolite, β-type zeolite, ZSM-5, and L-type zeolite.

34. A method for producing low-sulfur FCC gasoline, comprising catalytically cracking heavy oil by the use of the desulfurization function-added FCC catalyst of claim 22.

35. A method for producing low-sulfur FCC gasoline, comprising catalytically cracking heavy oil by the use of the FCC catalyst of claim 30.

36. A method for producing low-sulfur FCC gasoline, comprising catalytically cracking heavy oil by the use of the desulfurization function-added FCC catalyst produced according to the method of claim 31.

37. The method for producing low-sulfur FCC gasoline as claimed in claim 34, wherein the heavy oil is desulfurized heavy oil and/or desulfurized heavy gas oil, the sulfur content of the heavy oil is from 0.03 to 0.7 % by mass, and the sulfur content of the obtained low-sulfur FCC gasoline within a range of the boiling point range C₅ to 230°C is at most 50 ppm by mass.

38. The method for producing low-sulfur FCC gasoline as claimed in claim 37, wherein the sulfur content of the obtained low-sulfur FCC gasoline within a range of the boiling point range C₅ to 230°C is at most 30 ppm by mass.

39. The method for producing low-sulfur FCC gasoline as claimed in claim 38, wherein the sulfur content of the obtained low-sulfur FCC gasoline within a range of the boiling point range C₅ to 230°C is at most 15 ppm by mass.

40. The desulfurization function-added FCC catalyst having at least vanadium and manganese and/or phosphorus supported on a porous inorganic oxide-containing carrier, wherein the supported vanadium amount is from 500 to 20000 ppm by mass in terms of vanadium metal, vanadium and manganese and/or phosphorus form a complex ion in a supporting solution for use in supporting vanadium and manganese and/or phosphorus, and the permeability of the complex ion through a reverse osmosis membrane is at most 25 % relative to the permeability of vanadium through the reverse osmosis membrane.

41. The desulfurization function-added FCC catalyst as claimed in claim 40, wherein the supported manganese amount is from 500 to 20000 ppm by mass in terms of manganese metal.

42. The desulfurization function-added FCC catalyst as claimed in claim 40, wherein the supported phosphorus amount is from 100 to 7000 ppm by mass in terms of phosphorus atom.

43. The desulfurization function-added FCC catalyst as claimed in claim 40, wherein the porous inorganic oxide is at least one selected from zeolite, alumina, silica, silica-alumina, titania, alumina-titania, silica-titania, kaolin, halloysite and bentonite.

44. The desulfurization function-added FCC catalyst as claimed in claim 43, wherein the carrier comprises (a) a zeolite and (b) a porous inorganic oxide except zeolite.

45. The desulfurization function-added FCC catalyst as claimed in claim 44, wherein the zeolite is at least one selected from Y-type zeolite, rare earth exchanged Y-type zeolite, USY-type zeolite, rare earth exchanged USY-type zeolite, β-type zeolite, ZSM-5, and L-type zeolite.

46. The desulfurization function-added FCC catalyst as claimed in claim 44, wherein vanadium is supported on the outer surface of the zeolite or on the porous inorganic oxide except zeolite.

47. The desulfurization function-added FCC catalyst as claimed in claim 40, wherein vanadium is supported inside the macropores of the carrier.

48. A FCC catalyst produced by adding (B) a FCC equilibrium catalyst having a vanadium and nickel accumulated amount of from 50 to 20000 ppm by mass to (A) the desulfurization function-added FCC catalyst of claim 40, in an amount of from 0 to 98 % by mass based on the total amount of the catalyst.

49. A method for producing a desulfurization function-added FCC catalyst by supporting a supporting solution that contains at least vanadium and manganese and/or phosphorus on a porous inorganic oxide-containing carrier, wherein the supported vanadium amount is from 500 to 20000 ppm by mass in terms of vanadium metal, vanadium and manganese and/or phosphorus form a complex ion in the supporting solution, and the permeability of the complex ion through a reverse osmosis membrane is at most 25 % relative to the permeability of vanadium through the reverse osmosis membrane.

50. The method for producing a desulfurization function-added FCC catalyst as claimed in claim 49, wherein the supported manganese amount is from 500 to 20000 ppm by mass in terms of manganese metal, and the supported phosphorus amount is from 100 to 7000 ppm by mass in terms of phosphorus atom.

51. The method for producing a desulfurization function-added FCC catalyst as claimed in claim 49, wherein the porous inorganic oxide is at least one selected from zeolite, alumina, silica, silica-alumina, titania, alumina-titania, silica-titania, kaolin, halloysite and bentonite.

52. The method for producing a desulfurization function-added FCC catalyst as claimed in claim 51, wherein the carrier comprises (a) a zeolite and (b) a porous inorganic oxide except zeolite.

53. The method for producing a desulfurization function-added FCC catalyst as claimed in claim 52, wherein the zeolite is at least one selected from Y-type zeolite, rare earth exchanged Y-type zeolite, USY-type zeolite, rare earth exchanged USY-type zeolite, β-type zeolite, ZSM-5 and L-type zeolite.

54. A method for producing low-sulfur FCC gasoline, comprising catalytically cracking heavy oil by the use of the desulfurization function-added FCC catalyst of claim 40.

55. A method for producing low-sulfur FCC gasoline, comprising catalytically cracking heavy oil by the use of the FCC catalyst of claim 48.

56. A method for producing low-sulfur FCC gasoline, comprising catalytically cracking heavy oil by the use of the desulfurization function-added FCC catalyst produced according to the method of claim 49.

57. The method for producing low-sulfur FCC gasoline as claimed in claim 54, wherein the heavy oil is desulfurized heavy oil and/or desulfurized heavy gas oil, the sulfur content of the heavy oil is from 0.03 to 0.7 % by mass, and the sulfur content of the obtained low-sulfur FCC gasoline within a range of the boiling point range C₅ to 230°C is at most 50 ppm by mass.

58. The method for producing low-sulfur FCC gasoline as claimed in claim 57, wherein the sulfur content of the obtained low-sulfur FCC gasoline within a range of the boiling point range C₅ to 230°C is at most 30 ppm by mass.

59. The method for producing low-sulfur FCC gasoline as claimed in claim 58, wherein the sulfur content of the obtained low-sulfur FCC gasoline within a range of the boiling point range C₅ to 230°C is at most 15 ppm by mass.
